# EUROPEAN PATENT SPECIFICATION

(11) **EP 2 950 514 B1**
(45) Date of publication and mention of the grant of the patent: **29.06.2016**
(21) Application number: 15166535.3
(22) Date of filing: 06.05.2015
(51) Int. Cl.: H04M 15/00

(54) **MOBILE DIGITAL CELLULAR TELECOMMUNICATION SYSTEM WITH ADVANCED RATING FUNCTIONALITY**
MOBILES DIGITALES ZELLULARES TELEKOMMUNIKATIONSSYSTEM MIT ERWEITERTER BEWERTUNGSFUNKTIONALITÄT
SYSTÈME DE TÉLÉCOMMUNICATION CELLULAIRE NUMÉRIQUE MOBILE AVEC FONCTIONNALITÉ DE TARIFICATION AVANCÉE

(30) Priority: 27.05.2014 US 201414287452
(43) Date of publication of application: 02.12.2015
(73) Proprietor: SAP SE, 69190 Walldorf (DE)
(72) Inventor: Lang, Georg, 69190 Walldorf (DE); Hofsaess, Christofer, 69190 Walldorf (DE); Kaufmann, Artur, 69190 Walldorf (DE); Luther, Joerg, 69190 Walldorf (DE)
(74) Representative: Richardt Patentanwälte PartG mbB

(56) References cited:
- WO-A1-2007/002577
- US-A1- 2008 243 655

## Description

### Technical field

This invention relates to telecommunications processing systems. In particular, this invention relates to a flexible and efficient real time event driven rating system for determining charge amounts for a diverse array of telecommunications.

### Background

Usage-related transactions, such as consumption items related to telecommunications (e.g., call detail records), may be processed on a per-transaction basis or as a group of transactions related to a particular account and time period. For example, some of the transactions may be rated (e.g., having an assigned price), and the remaining transaction may be unrated. The contract that is associated with a particular customer or entity may stipulate, for example, that the transactions are to be handled in a certain way. For example, some or all of the transactions may apply to fixed-price billing for the account, so that transactions, whether rated or unrated, result in a fixed billing amount for a given time period. Other contracts can speculate that a certain amount of use (e.g., 500 minutes of phone call time) is free (or included in a flat price) under a particular contract option, but transactions exceeding the contracted level of use are to be charged an additional rate. At that end of a billing cycle, for example, a customer can be billed depending on an amount of use and a current contract.

Further exemplary systems and methods are known from prior-art documents US 2008/243655 A1 and WO 2007/002577 A1.

### Summary

Postpaid account is, as understood here, an account of a telecom client/user for which service is provided by a prior arrangement with a telecom operator. The user in this situation is billed after the fact according to his use of telecom services (e.g. mobile phone services) at the end of each month. Typically, the client's contract specifies a limit or "allowance" of minutes, text messages etc., and the customer will be billed at a flat rate for any usage equal to or less than that allowance. Any usage above that limit incurs extra charges. A user in this situation can have no limit on use of telecom services and, as a consequence, unlimited credit.

Prepaid account is, as understood here, an account of a telecom client/user for which credit is purchased in advance of service use. The purchased credit is used to pay for telecom services (e.g. mobile phone services) at the point the service is accessed or consumed. If there is no available credit then access to the requested service is denied by a telecom operator or by mobile phone network. Users are able to top up their credit at any time using a variety of payment mechanisms.

The disclosure generally describes computer-implemented methods, computer-readable media, and mobile digital cellular telecommunication systems for processing transactions such as call detail records (CRDs). The CDRs relate to different resources which are used by customers. The CDRs may have different types, CDRs of one type can comprise descriptions of internet connections established by users via their mobile terminals (e.g. smartphones), CDRs of another type can comprise descriptions of telephone calls made by users, CDRs of yet another type can comprise descriptions of short message services (SMSs) sent by users, and CDRs of further types can comprise descriptions of many other services available to the users in the digital cellular telecommunication networks. The rating of CDRs may be quite complex, it may depend on overall usage of particular resource, or on overall usage of all used resources by a particular user or a group of users resources. On top of this, resource providers may apply loyalty program rules which affect overall billing of the consumed resources at an end of a billing cycle. As a result thereof the rating-billing scheme gets quite complex and may demand extra resources. These resources may be quite expensive, because the mobile digital cellular telecommunication system comprise real time event driven systems, which are configured to perform a lot of real time functions such as rating of CDRs and confirm quality of services (QoS) provided to users. Straightforward solution, when all rating/billing functionalities are performed by the real time event driven rating systems may demand an extensive increase in capacity of these system. On contrary, providing complex rating/billing functionalities by a mobile digital cellular telecommunication system of the present invention is enabled by efficient workload distribution between various components of the system. Functioning of this system can be illustrated on the following example. First a provider contract associated with a particular account is identified. In response to determining that the identified provider contract is associated with a periodic activity, a rating request is created that is associated with the particular account. The created rating request associated with the particular account is added to a queue of consumption items for processing, so that the created rating request, when processed, triggers an action corresponding to the determined periodic activity at an external system.

It is an objective of embodiments of the invention to provide for a system configured to provide effective real time rating of CDRs, a computer-implemented method for effective real time rating of CDRs, and a computer readable medium having stored thereon a computer executable program code for providing effective real time rating of CDRs. Advantageous embodiments are described in the dependent claims.

According to one embodiment, the present invention relates to a mobile digital cellular telecommunication system comprising a network component configured to generate call detail records (CDRs), a real time event driven rating system, and a batch processing system. The real time event driven rating system comprises a rating component having an interface for inputting the CDRs and is configured for rating an inputted CDR. The real time event driven rating system is configured in response to receiving of a CDR from the network component for a telecommunication service provided to a user to perform the following steps if the received CDR is related to a prepaid account of the user: inputting the received CDR into the rating component for determining a charge amount for the received CDR and charging the prepaid account by the charge amount. The real time event driven rating system is further configured in response to the receiving of the CDR from the network component for the telecommunication service provided to the user to perform the following steps if the received CDR is related to the prepaid account of the user and if the remaining credit of the account balance of the prepaid account is below a first threshold: generating an interruption message for interruption of the telecommunication service and sending the interruption message to the network component. The real time event driven rating system is further configured in response to receiving of a CDR from the network component for a telecommunication service provided to a user to perform the following step if the received CDR is related to a postpaid account of the user: forwarding the received CDR to the batch processing system. The batch processing system is configured to perform the following steps: receiving the forwarded CDR and storing the received CDR in a database. The batch processing system is further configured to perform the following steps at an end of a billing cycle of the postpaid account: querying the database for retrieval of CDRs received during the billing cycle, generating an event record comprising the retrieved CDRs, and sending the event record to the real time event driven rating system. The real time event driven rating system is further configured to perform the following steps in response to receiving the event record from the batch processing system: inputting the CDRs comprised in the received event record into the rating component for determining a charge amount for CDRs comprised in the event record and sending a billing message to the batch processing system comprising the charge amount for CDRs comprised in the event record.

According to another embodiment, the present invention relates to a computer-implemented method for processing of CDRs in mobile digital cellular telecommunication system comprising a network component configured to generate call detail records (CDRs), a real time event driven rating system, and a batch processing system. The real time event driven rating system comprises a rating component having an interface for inputting the CDRs and is configured for rating an inputted CDR. The method comprises the following steps performed by the real time event driven rating system is configured in response to receiving of a CDR from the network component for a telecommunication service provided to a user to perform if the received CDR is related to a prepaid account of the user: inputting the received CDR into the rating component for determining a charge amount for the received CDR and charging the prepaid account by the charge amount. The method further comprises the following steps performed by the real time event driven rating system in response to the receiving of the CDR from the network component for the telecommunication service provided to the user if the received CDR is related to the prepaid account of the user and if the remaining credit of the account balance of the prepaid account is below a first threshold: generating an interruption message for interruption of the telecommunication service and sending the interruption message to the network component. The method further comprises the following step performed by the real time event driven rating system in response to receiving of a CDR from the network component for a telecommunication service provided to a user if the received CDR is related to a postpaid account of the user: forwarding the received CDR to the batch processing system. The method further comprises the following steps performed by the batch processing system: receiving the forwarded CDR and storing the received CDR in a database. The method further comprises the following steps performed by the batch processing system at an end of a billing cycle of the postpaid account: querying the database for retrieval of CDRs received during the billing cycle, generating an event record, the event record comprising the retrieved CDRs, and sending the event record to the real time event driven rating system. The method further comprises the following steps performed by the real time event driven rating system in response to receiving the event record from the batch processing system: inputting the CDRs comprised in the received event record into the rating component for determining a charge amount for CDRs comprised in the event record and sending a billing message to the batch processing system comprising the charge amount for CDRs comprised in the event record.

According to another embodiment, the present invention relates to a computer readable medium having stored thereon a computer executable code for execution by computer processors controlling a mobile digital cellular telecommunication system, wherein execution of the instructions of the executable code causes the computer processors to execute the computer-implemented of the aforementioned embodiment.

This way of configuring of the mobile digital cellular telecommunication system enables to optimize the workload of the real time event driven rating system. The rating of CDRs related to prepaid accounts is performed in real time, while rating of CDRs related to postpaid accounts is processed batch wise after the end of the billing cycle of the postpaid account. For instance, it is more efficient to cause the rating component to determine a charge amount for 3 SMS having the same price than to cause the rating component to determine 3 times a charge amount for each of the SMS.

According to another embodiment of the present invention, the real time event driven rating system is further being configured to perform the following steps in response to the receiving of the CDR from the network component for the telecommunication service provided to the user if a quality of service (QoS) of the telecommunication service or the rating of the received CDR depends on a history of usage of the telecommunication service by the user: extracting usage information from the received CDR, updating one or more counters by using the extracted usage information, generating a QoS message in accordance with information stored in the one or more counters, and sending the QoS message to the network component, wherein the one or more counters are indicative of the history of usage of the telecommunication service. The batch processing system is being further configured to perform the following step at the end of the billing cycle of the postpaid account: sending a reset counter message to the real time event driven rating system. The real time event driven rating system is further being configured to perform the following steps: receiving the reset counter message; and in response to the receiving of the reset counter message resetting the one or more counters.

These features further specify a work load sharing between the batch processing system and the real time event driven rating system. Only information being needed for real time support of QoS functionality by the real time event driven rating system is extracted from CDRs and stored in counters of the real time event driven rating system. These counters related to postpaid accounts are reset at the end of the billing cycles of the postpaid accounts. This may be illustrated on a simple example. The user may be allowed to send only 3 SMS per billing cycle. If the user wants to send more than 3 SMS during one of the billing cycles, those requests are blocked. In order to support this real time functionality the real time event driven rating system needs a counter for SMS, which is being reset after each of the billing cycles. Moreover the functionality of event generator to signal the end of the billing cycle is transferred to the batch processing system, as a result thereof the workload of the real time event driven rating system is reduced.

According to another embodiment of the present invention, the batch processing system is further configured to perform the step of monitoring a volume of data transmitted per time unit from the real time event driven rating system to the batch processing system, wherein the data comprises the forwarded CDRs, wherein the sending of the event record to the real time event driven rating system is performed when the volume of the data transmitted per time unit is below a second threshold value.

This feature enables to monitor a workload of the real time event driven rating system and to send to it the event record when its load is low. The data volume transmitted per unit time can be measured for instance in megabit per second.

According to another embodiment of the present invention, the sending of the event record to the real time event driven rating system is performed via a web service being configured to perform the steps of: receiving the event record from the batch processing system, executing at least one of the groups of steps, and sending the event record to the real time event driven rating system after the performing of the at least one of the following groups of steps. One of the groups of steps comprises the steps of: identifying CDRs of the same type in the event record, generating one aggregate CDR for all of the identified CDRs, and substituting all of the identified CDRs in the event record by the aggregate CDR, wherein the rating component is configured to determine the same charge amount for the aggregate CDR and for all of the identified CDRs. Another one of the groups of steps comprises the steps of: identifying of one or more applicable user loyalty program rules for one or more of the CDRs in the event record; and modifying the one or more identified CDRs in the event record according to the one or more identified applicable user loyalty rules.

Advantages of this approach can be illustrated on the following simple examples. For instance, the event record comprises 3 CDRs and each of the CDRs is related to an SMS sent by the same user and having the same rating rules for determination of charge. In this case it will be more efficient to substitute these 3 CDRs in the event record with another CDR related to 3 SMS. In this case the rating procedure performed by the rating component will be much more efficient. Yet another example, suppose one of providers wants to make a discount for users during one of the billing cycles, i.e. charge only 2/3 of SMS sent by customers. Changing account information on the database server for a duration of one billing cycle means dispatching updates of user accounts over the digital cellular telecommunication system twice, i.e. one update has to be sent to the real time event driven rating system and another update has to be sent to the batch processing system. Moreover it is not known upfront, whether each of the users qualifying for this discount will send any SMS during the billing cycle when the discount is valid. This embodiment offers a simple and effective way. When web service is used, there is no need in updating accounts, instead the lists of CDRs of the users, who have to get a discount can be modified. For instance, if a user has sent 3 SMS and the event message comprises 3 respective CDRs, then provider can simply delete one of the CDRs in the event message and as a result thereof the user will be charged only 2/3 of overall price as specified in the discount.

According to another embodiment of the present invention, wherein the batch processing system is further configured to perform the steps of: monitoring a volume of data transmitted per time unit from the real time event driven rating system to the batch processing system; and causing the web interface to execute the sending of the event record when the volume of the data transmitted per time unit is below a second threshold value.

According to another embodiment of the present invention, the real time event driven rating system is further configured to perform the following steps in response to the receiving of the CDR from the network component for the telecommunication service provided to the user if a quality of service (QoS) of the telecommunication service depends on a history of usage of the telecommunication service by the user: extracting usage information from the received CDR; updating one or more counters by using the extracted usage information; generating a QoS message in accordance with information stored in the one or more counters; and sending the QoS message to the network component, wherein the one or more counters being indicative of the history of usage of the telecommunication service. The real time event driven rating system is further configured to perform the following step in response to receiving the event record from the batch processing system: resetting the one or more counters.

According to another embodiment of the present invention, the batch processing system is further configured to at least one of the following groups of steps before the generating the event record. One group of steps comprises the following steps of: identifying the retrieved CDRs having the same type; generating one aggregate CDR for all of the identified CDRs; and substituting all of the identified CDRs in the event record by the aggregate CDR, wherein the rating component is configured to determine the same charge amount for the aggregate CDR and for all of the identified CDRs. Another group of steps comprises the following steps of: identifying one or more applicable user loyalty program rules for one or more of the retrieved CDRs, and modifying the one or more of the retrieved CDRs according to the one or more identified applicable user loyalty rules, wherein the event record is generated in a way that it comprises the one or more modified retrieved CDRs.

According to another embodiment of the present invention, the mobile digital cellular telecommunication system further comprises a database server for storing prepaid accounts and postpaid accounts. Each of some of the postpaid accounts comprises a respective services list of telecommunication services to be provided by one or more network components to a user having the each of some of the postpaid accounts, a respective rating information for determining charge amounts for CDRs generated in relation to using the telecommunication services of the services list of the each of some of the postpaid accounts, a respective billing cycle information determining schedule of the billing cycles of the each of some of the postpaid accounts. Each of some of the prepaid accounts comprises a respective services list of telecommunication services to be provided by one or more network components to a user having the each of some of the prepaid accounts and a respective rating information for determining charge amounts for CDRs generated in relation to using the telecommunication services of the services list of the each of some of the postpaid accounts. The database server is configured to perform the steps of: sending the services list to the respective one or more network components, sending the rating information to the respective the real time event driven rating system, and sending the billing cycle information to the batch processing system. The network component is configured to perform the steps of: receiving the services list from the database server, storing the received services list, and providing the services of the received list to a user having either the postpaid or the prepaid account comprising the stored services list. The real time event driven rating system is further configured to perform the steps of: receiving the rating information from the database server and storing the received rating information, wherein the rating component is configured for rating the inputted CDR according to the stored rating information. The batch processing system is further configured to perform the steps of: receiving the billing cycle information from the database server and storing the received billing cycle information.

This way of distribution of account information supports optimum distribution of the workload between different components of the mobile digital cellular telecommunication system. Only account information relevant for operation of a particular component is distributed to it by the database server, i.e. no redundant information is stored. As a result thereof the data protection is increased. Moreover, since there is only one center component for distribution of information, it is very easy to perform updates of account information. First, the account information is updated on the database server, afterwards the relevant updates are distributed to the components of the mobile digital cellular telecommunication system.

According to another embodiment of the present invention, the mobile digital cellular telecommunication system further comprise further real time event driven rating systems, wherein the network component is configured to send the CDRs to the real time event driven rating system, which data communicative coupling to the network component has the lowest data transfer latency in comparison with any other real time event driven rating system, wherein a data transfer latency of a data communicative coupling between the batch processing system and the real time event driven rating system, to which the network component is configured to send CDRs, is higher than the data transfer latency of the data communicative coupling used for the sending of the CDRs.

This architecture enables the fasted network connection between the network component and the real time event driven system rating system, because these two units in contrast to the others have to provide real time services.

The details of one or more implementations of the subject matter of this specification are set forth in the accompanying drawings and the description below. Other features, aspects, and advantages of the subject matter will become apparent from the description, the drawings, and the claims.

### Figures

### DESCRIPTION OF DRAWINGS

FIG. 1 is a block diagram illustrating an example environment for processing consumption items.
FIG. 2 shows a flowchart of an example method for creating a rating request for use in processing consumption items.
FIG. 3 shows a flowchart of an example process 300 for creating and processing rating requests.
FIG. 4 shows a swim lane diagram of an example process 400 for creating rating requests.
Fig. 5. is a block diagram illustrating an example environment for processing CDRs.
Fig. 6. shows a flowcharts of an example process 620 for processing CDRs.
Fig. 7 shows flowcharts of example processes 615 and 621 processing CDRs.

### Detailed description

This disclosure generally describes computer-implemented methods, computer-readable media, and computer systems for creating a rating request for use in processing consumption items, in particular CDRs. The following description is presented to enable any person skilled in the art to practice the disclosed subject matter, and is provided in the context of one or more particular implementations. Various modifications to the disclosed implementations will be readily apparent to those skilled in the art, and the general principles defined herein may be applied to other implementations and applications without departing from scope of the disclosure. Thus, the present disclosure is not intended to be limited to the described and/or illustrated implementations, but is to be accorded the widest scope consistent with the principles and features disclosed herein.

Rating requests can be used to trigger certain activities in external systems on a periodic basis. For example, a rating request for use in processing call detail records associated with a customer's phone plan can indicate how the call detail records are to be processed. In some implementations, the call detail records and the rating request can be used to generate consumption items, e.g., that are processed for billing purposes. In convergent charging, for example, rating requests can be used to create recurring charges (e.g., for flat-rate contracts or other situations). The usage rating can be based, for example, on counters such as "free minutes per month." In some implementations, the counters can be reset periodically, such as at the end of a period (e.g., the customer's billing cycle). The period until the counters are reset typically ends at the date that the recurring charge is created. For example, if a recurring charge applies for the month of January, then a counter associated with "free minutes" is typically reset at the end of January, or the end of the billing cycle for the applicable customer/account.

In conventional systems, for example, the creation of the recurring charge and the counter reset must be triggered explicitly. For example, the trigger can be:
a) a usage event in January that has to be rated or b) a basic scheduler in a convergent charging function that creates the recurring charges for all contracts in the system. However, in computer-implemented methods, computer-readable media, and computer systems described herein, triggers can be automatic. For example, recurring charges and a reset of counter values can occur automatically and in a timely fashion, e.g., before the invoice is issued to the customer, it has to be ensured that the recurring charge has been created. In some implementations, the recurring charge can include an activation date, e.g., that corresponds to the end of a billing cycle.

In some implementations, a mass activity function can create a group of rating requests, e.g., that have the goal of triggering the activation of recurring charges periodically, such as for multiple customers/accounts having the same billing cycle. The rating requests can be created automatically and are connected, and based upon, the activation of contracts. The connection between rating requests and the specific contracts on which they are based facilitates the activation of recurring charges and resetting the counters.

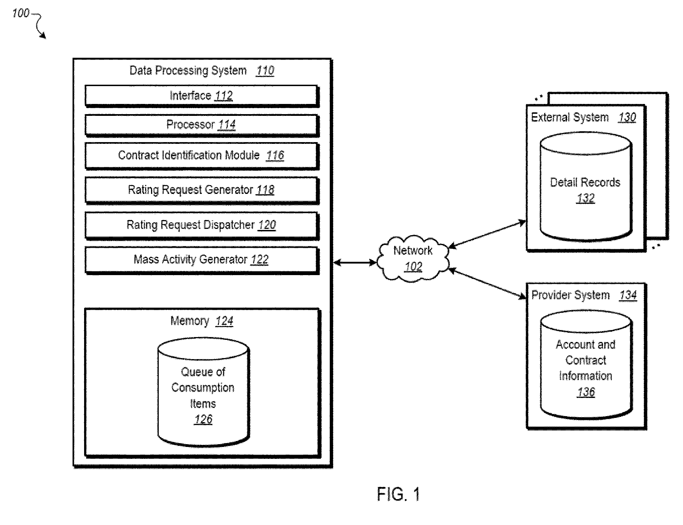

FIG. 1 illustrates an example environment 100 for processing consumption items. Specifically, the illustrated environment 100 includes at least one data processing system 110, including a queue of consumption items 126, and any number of external systems 130, each having remote data records 132 to be processed by the data processing system 110. The environment 100 further includes at least one provider system 134 that includes account and contract information 136. The data processing system 110, the external system(s) 130, and the provider system(s) 134 are communicably coupled using a network 102.

Although FIG. 1 illustrates a single data processing system 110, the environment 100 can be implemented using two or more data processing systems 110, each capable of processing consumption items. The environment 100 can also be implemented using computers, servers, or other components. Indeed, components of the environment 100 may be any computer or processing device. According to some implementations, components of the environment 100 may also include, or be communicably coupled with, an e-mail server, a web server, a caching server, a streaming data server, and/or other suitable server(s). In some implementations, components of the environment 100 may be distributed in different locations and coupled using the network 102.

The data processing system 110 includes an interface 112, a processor 114, a contract identification module 116 for identifying contract information, a rating request generator 118 for generating rating requests, a rating request dispatcher 120 for inserting rating requests into the queue of consumption items 126, a mass activity generator 122, and a memory 124. The interface 112 can be used by the data processing system 110 for communicating with external systems 130 and provider systems 134 in a distributed environment, connected to the network 102, as well as other systems (not illustrated) communicably coupled to the network 102. Generally, the interface 112 comprises logic encoded in software and/or hardware in a suitable combination and operable to communicate with the network 102. More specifically, the interface 112 may comprise software supporting one or more communication protocols associated with communications such that the network 102 or interface's hardware is operable to communicate physical signals within and outside of the illustrated environment 100.

The contract identification module 116, for example, can identify provider contracts for particular user accounts, such as a cell phone contract for a cell phone plan that a customer has with a phone carrier. In some implementations, the provider contract can be identified from account and contract information 136 at the provider system 134 associated with the contract.

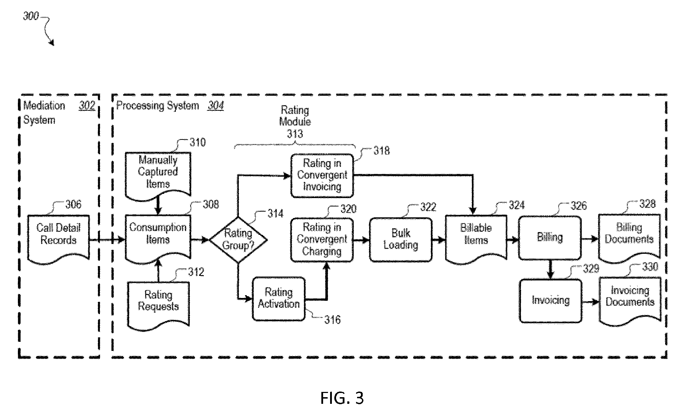

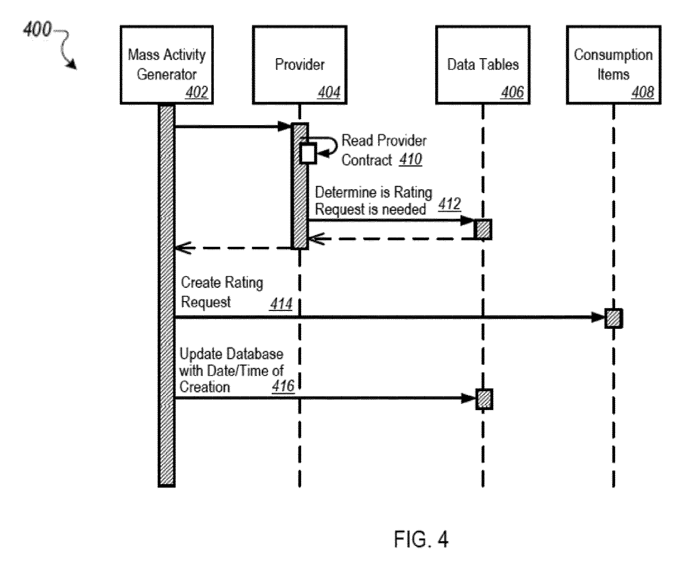

The rating request generator 118, for example, can create a rating request that is associated with a particular account. For example, the rating request generator 118 can create a rating request for Customer X that indicates that the detail records for the customer are to be processed in a certain way and at a specific time. The way in which the records are to be processed, for example, can depend on information in the customer's contract, e.g., identified from account and contract information 136. More detailed examples of creating rating requests are provided below with reference to FIGS. 3 and 4. U.S. Patent application Ser. No. 14/139,630, entitled "Flexible Rating based on Rating Areas and Rating Groups," which is assigned to the assignee of the present invention and is hereby incorporated by reference, describes methods for generating rating requests.

The rating request dispatcher 120, for example, can add the rating request created by the rating request generator 118 to the queue of consumption items 126 for processing. For example, the rating request can be used to generate a "dummy" or placeholder consumption item, e.g., that is not a detailed record to be processed but rather includes information that designates how consumption items are to be processed.

The mass activity generator 122 can create a mass activity that is set up to process consumption items for multiple customers. For example, the mass activity generator 122 can trigger the generation of rating requests for each of the provider contracts or accounts to be processed in a batch, e.g., for a specific period of time, such as a billing cycle.

The processor 114 can be used by the contract identification module 116, the rating request generator 118, the rating request dispatcher 120, and the mass activity generator 122 to perform their functions. Although illustrated as the single processor 114 in FIG. 1, two or more processors 114 may be used according to particular needs, desires, or particular implementations of the environment 100. Generally, the processor 114 executes instructions and manipulates data to perform the operations of the contract identification module 116, the rating request generator 118, the rating request dispatcher 120, and the mass activity generator 122.

The data processing system 110 also includes the memory 124. Although illustrated as a single memory 124 in FIG. 1, two or more memories 124 may be used according to particular needs, desires, or particular implementations of the environment 100. While memory 124 is illustrated as an integral component of the data processing system 110, in alternative implementations, memory 124 can be external to the data processing system 110 and/or the environment 100. In some implementations, memory 124 includes the queue of consumption items 126.

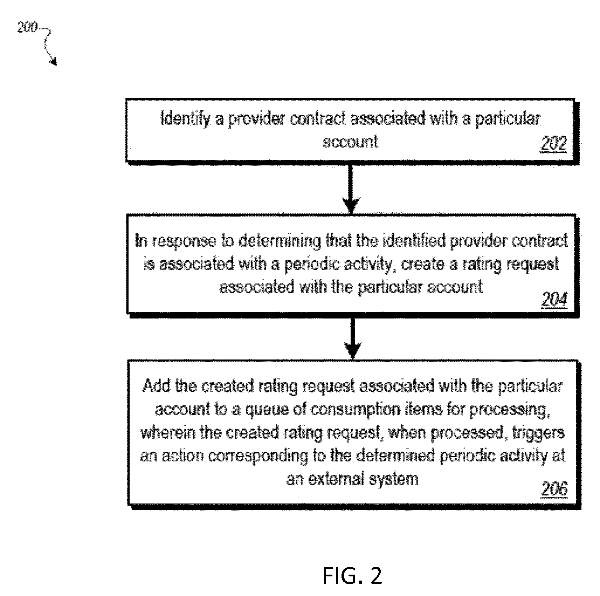

FIG. 2 shows a flowchart of an example method 200 for creating a rating request for use in processing consumption items. For clarity of presentation, the description that follows generally describes method 200 in the context of FIG. 1. However, it will be understood that the method 200 may be performed, for example, by any other suitable system, environment, software, and hardware, or a combination of systems, environments, software, and hardware as appropriate.

At 202, a provider contract associated with a particular account is identified. As an example, the contract identification module 116 can identify a contract for a particular user account, such as a cell phone contract for a cell phone plan that the user has with a phone carrier. In some implementations, the provider contract can be identified from account and contract information 136 at the provider system 134 associated with the contract.

In some implementations, identifying the provider contract associated with the particular account is performed in response to a mass activity, and the mass activity is performed for a plurality of provider contracts or accounts. For example, the mass activity generator 122 can create a mass activity that is set up to process consumption items (e.g., call detail records) for multiple customers. The mass activity, for example, can include processing call detail records for each of the provider contracts or accounts to be included in a batch. The batch processing can be for a specific period of time, a specific number of records, or for another type of grouping of records. In some implementations, the main purpose of a mass activity is the execution of a certain task in a parallel manner (e.g., multi-threaded). For example, execution can occur in batch mode, e.g., an execution without dialog steps and not necessarily using multi-threading. In some implementations, the mass activity is performed once in a billing cycle. As an example, the mass activity generator 122 can create a mass activity that is to be performed for all customers who have a billing cycle that ends on the same day, or some other group of customers. The mass activity can occur, for example, at month-end, at period-end, or on demand. In another example, the mass activity can be performed daily, and some accounts may be processed on certain days, e.g., on an as-needed basis or near the end of the billing cycle for a customer. In another example, a mass activity can be performed to create rating requests for multiple customers or accounts, where the rating requests correspond to a one-time promotion, discount, event or special purpose. In some implementations, a date-time of the prior generation can be maintained, and a comparison of the current date to the maintained prior generation date-time can be made to determine if another rating request is to be added. In some implementations, a maintained date/time can be used with maintained settings/rules.

At 204, in response to determining that the identified provider contract is associated with a periodic activity, a rating request is created that is associated with the particular account. Creating the rating request, for example, can occur at the appropriate time to prepare the process and generate the rating request. For example, the rating request generator 118 can create a rating request for Customer X that indicates that the detail records for the customer are to be processed in a certain way and at a specific time. The way in which the records are to be processed, for example, can depend on information in the customer's contract. For example, if the contract is a phone carrier contract associated with the customer's cell phone plan, then the contract can indicate that the first 500 minutes are free (e.g., included in a base phone plan at a flat price) and additional calls are to be charged a predetermined per-minute rate. The contract can also indicate that certain types of calls are to be charged (or not charged) differently, e.g., based on time of day, parties (e.g., recipient/caller) involved in the call, the length of the call, the type of plans of the other parties (e.g., whether or not the other parties are in the same network), promotions involved with the customer's plans, group pricing, and/or other aspects of the contract. The rating request can also include information that indicates whether the period is a complete or a partial period, whether the customer is a new or existing customer, and whether the customer is closing the account (e.g., to generate a final bill). In some instances, the rating request can simply be a placeholder that says to trigger an act without details included therein, e.g., to produce consumption items for details associated with the information.

At 206, the created rating request associated with the particular account is added to a queue of consumption items for processing, so that the created rating request, when processed, triggers an action corresponding to the determined periodic activity at an external system. For example, the rating request dispatcher 120 can add the created rating request to the queue of consumption items 126. In some implementations, the rating request can result in the creation of more than one consumption item that is added to the queue of consumption items 126, e.g., to handle complete processing requirements. In some implementations, rating requests that are added to the queue of consumption items 126 can be added so that the rating requests are processed first, e.g., so that the consumption items associated with the rating request will be processed in a certain way.

In some implementations, a consumption item is a telecommunication charge related to call or a message. For example, the consumption items in the queue of consumption items 126 can be call detail records, each one representing a single call or a single text message or some other individual or group of consumption items. Other consumption items are possible, e.g., including songs, videos, pay-per-view movies or other entertainment and/or media, pay-as-you-go items such as data downloads (e.g., Internet usage), or other content or usage.

In some implementations, processing consumption items includes processing consumption items by rating groups. As an example, the processor 114, when processing consumption items from the queue of consumption items 126, can process the consumption items by groups based on how the consumption items are to be processed. For example, one rating group may exist for consumption items that are to allow a customer's first 500 minutes in a billing cycle to be free. Another rating group, for example, can include consumption items that are to be charged solely on the length of a call, the size of a download, or some other metric.

In some implementations, rating requests are associated with a rating request-specific rating group. For example, the rating request generator 118 can create a rating request that is specific to a particular type of contract, e.g., 500 free minutes and 10 cents per minute over the limit.

In some implementations, processing a rating request includes triggering actions on the external system, including actions for executing a web service, including to verify information in the consumption items or to access additional information associated with the consumption items or the particular account. For example, the rating request generator can add information in a rating request so that, when the rating request is processed from the queue of consumption items, the rating request will cause external web services to be accessed to verify information, to obtain addition information to be used during processing, and/or to generate consumption items at the external systems that will later be received at the processing system (e.g.., added to a processing queue later).

In some implementations, executing the web service includes connecting the system to contract activation of particular account. Further, executing the web service can cause the contract to be analyzed and any periodic charges/credits/actions to be generated. For example, a call to a web service that occurs during processing of a rating request can cause an account to be accessed, activated, or some other action. As an example, a rating request inserted as a consumption item associated with a phone plan can include an account activation (or some other action) for a non-phone service (e.g., satellite TV, broadband service, long distance service, land lines, etc.) that is bundled with the phone plan for billing purposes.

In some implementations, in response to executing the web service, a new consumption item is received from the external system, and the new received consumption item is processed. For example, information received from the external system can be used by the rating request generator 118 to generate one or more additional consumption items to be added to the queue of consumption items 126, e.g., to be processed immediately or at a later time.

FIG. 3 shows a flowchart of an example process 300 for creating and processing rating requests. For clarity of presentation, the description that follows generally describes process 300 in the context of FIG. 1. However, it will be understood that the process 300 may be performed, for example, by any other suitable system, environment, software, and hardware, or a combination of systems, environments, software, and hardware as appropriate.

The process 300 includes processing and operations that occur, for example, in a mediation system 302 and a processing system 304. For example, the mediation system 302 can collect and store call detail records 306 that are to be provided to the processing system 304 for processing. Call detail records 306, for example, can be records that include information for individual phone calls and/or other billable or non-billable customer activities, such as in the customer's phone plan. For example, call detail records 306 can be the remote data records 132 of an external system 130. In some implementations, the process 300 can support (or support interfacing with) at least one customer relationship management (CRM) system, e.g., that may also generate consumption items and/or billable items. Example CRM-related consumption items can include credit memos that are created from a CRM front-end for call center agents and consumption items that are created for use in customer self-service (e.g., a charge for creation of an intermediate bill). In some implementations, billable items or consumption items can be sent by middleware systems and/or by other third-party or legacy systems.

Call detail records 306, once they reach the processing system 304, can become consumption items 308 that are collected by the processing system 304. For example, the consumption items 308 are data records to be processed by the processing system 304, such as for billing, invoicing, reporting or other purposes. In addition to including information from call detail records 306, the consumption items 308 can include consumption items that are created manually (e.g., manually captured items 310) and rating requests 312. For example, rating requests 312 can be created as described below with respect to FIG. 4.

The processing system 304 can collect selected consumption items, build rating groups, and send the consumption items for each group to a rating module 313 which can be assigned in a rating group configuration. A rating group determination 314, for example, can determine which consumption items 308 are rated (or unrated) and which ones need to be rated (or unrated). Example components of rating module 313 include the rating function for convergent invoicing 318, which can provide a direct derivation of billable items 324 using consumption items 308. In another example, a rating activation module 316 can call existing web services for activating contracts for a given date and to provide consumption items for a rating in convergent charging 320. For example, the rating activation module 316 can activate a contract if activation has not already been done before for the given time period, e.g., based on instructions in a rating request 312 associated with a rating group of consumption items. As a result, recurring components defined in a charge are triggered if their execution date has been reached, and billable items are sent to convergent invoicing 318 for further processing with a subsequent bulk loading run 322. With this, billable items 324 needed for billing 326 are processed (e.g., for a particular billing period). For the processing system 304 to be able to process rated and unrated consumption items in this way, triggering is to occur at the right moment of the bill cycle. For example, a new transaction, in the form of a rating request 312, is created and inserted by the processing system 304 as a consumption item 308 for the creation of the rating requests according to the cycle of the contract. In some implementations, an invoicing activity 329 can produce invoicing documents 330 using information from at least billing 326.

FIG. 4 shows a swim lane diagram of an example process 400 for creating rating requests. For example, rating requests can be tied to, and be created for, particular billing cycles for particular customers or accounts. Each rating request that is created in the process 400, for example, can serve as a "dummy" consumption item that, instead of containing information (e.g., a phone call detail record) to be processed, includes instructions that indicate how a group of consumption items are to be processed. For example, the instructions can indicate that the consumption items are to be processed in a certain way and as a group for a particular customer and time period. In some implementations, multiple rating requests can be initiated by a mass activity generator 402 which can use provider 404 information (e.g., contract information on a per customer basis) to customize settings in a particular rating request for the customer (e.g., based on the customer's phone plan or other contract). The process 400 can use data tables 406 (e.g., to control processing) and create rating requests to be used as consumption items 408. The process 400 includes processes and processing associated with elements 402-408.

For example, rating request creation can be initiated by the mass activity generator 402. In some implementations, the mass activity generator 402 can include a main module for generating rating requests for a large group of customers. Initiating the creation of rating requests can occur at month-end, at the end of a group of customers' billing cycles, as one-time events, or in other situations. For example, for a mass activity in which multiple rating requests are to be generated, the mass activity generator 402 can read information from a database table that identifies which rating requests (e.g., period or scheduled) have been created and which ones need to be created. For example, the database tables can indicate that a request has already been created for a customer, e.g., in a certain period. The mass activity generator 402 can continue generating rating requests, for example, until unprocessed periods are processed and the desired data are created and added to a historical database table to indicate which rating requests were created and when. Consumption items can be created for each rating request, e.g., one consumption item per customer (or account), per period, as described in the following example operations.

At 410, for example, a provider contract associated with the customer/account is read, e.g., using contract information provided by the provider 404. The contract information can indicate, for example, how transactions (e.g., call detail records) are to be handled for the customer/account. For example, the contract that the customer has with the provider 404 can indicate that the first 500 minutes of calls are free, or included, in the calling plan for that customer. The contract may also indicate that call minutes exceeding 500 minutes are to be charged a flat rate. Other contracts for other customers, for example, can indicate that each call is to be charged according to a scheduled rate, e.g., based on length of call. Other contracts can include information that indicates how text messages, data downloads, and/or other consumption items are to be charged.

At 412, for example, a determination is made as to whether a rating request is needed for processing the consumption items associated with the contract, e.g., based on information in the contract. For example, if the contract stipulates that charges are simply to be processed based on usage (e.g., for a flat fee), then no rating request is necessary, as the process 400 can process the records as they exist. However, if the contract stipulates some kind of a usage plan limit, then it can be determined that a rating request is needed. In some instances, the determination may be a simple determination as to whether the rating request for a particular period has been generated, with minimal information associated with the reason for the creation of the rating request provided.

At 414, for example, the rating request is created. For example, if the contract stipulates a flat fee for 500 minutes (with per-minute overage charge for exceeding the limit), then the rating request can indicate those details. The rating request can indicate, for example, to "bill the customer X dollars for up to 500 minutes, and Y cents per minute for calls exceeding 500 minutes." In some implementations, the rating request that is created can be inserted into the consumption items 408, as another consumption item.

At 416, for example, a data table 406 (or some other database entry) is updated with the date and time that the rating request was added to the consumption items 408. For example, the data table 406 can serve as an updated history table that keeps track of rating requests that have been created, e.g., on a customer/account, time period basis.

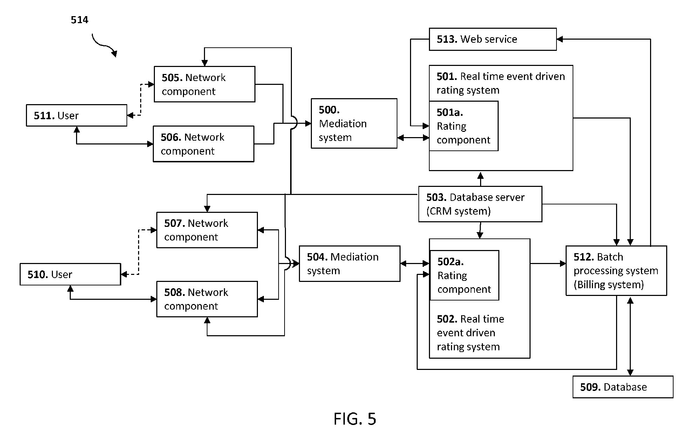

Fig. 5. is a block diagram illustrating an example environment for processing CDRs. This environment can be implemented as a mobile digital cellular telecommunication system. It comprises network components 505-508 configured to provide various digital cellular telecommunication connections (3G, 4G, GRPS, GSM, etc.) to the users 511 and 510. The network components can be a plurality of base stations dispersed throughout the service coverage area in order to support a network infrastructure of the cellular digital telecommunication network. The users can access to and use different services via these network components, for instance they can make phone calls, send SMS, establish internet connections and use various internet services via the established internet connections. The network components are further configured to generate CDRs related to the usage of services and send them to respective rating components 502a and 501 a of the real time event driven rating systems 501 and 502. These CDRs can be sent via respective mediation systems 500 and 504. The mediation systems perform real time conversion of CDRs generated in different formats by different systems in a standard machine parsable format, which can be processed by the real time event driven rating systems. The rating systems 501 and 502 have respective rating components 501 a and 502a which have interfaces for inputting the CDRs and being configured for rating an inputted CDR, wherein the rating comprises determining a charge amount for the inputted CDR. The rating systems are configured to send the determined charge amounts or to forward the inputted CDRs to a batch processing system 512. CRDs can be forwarded to the batch processing system without any modification, or they can be modified in a way that only information needed for determination of charging such as customer identification and specification of resource usage are left in the CRDs. The rating system can be further configured to register and manage history of usage of particular resources by users. For instance, one of the users has an internet traffic limit of 1 GB per month. In this case the rating system will use a counter of data volume used by the user and send Quality of Service (QoS) messages regarding the allowed QoS to the network components. For instance if data volume is below the limit of 1 GB, then the rating system will send to the network component a QoS message confirming that internet connection can be provided, otherwise the rating system will send to the network component a QoS message indicating that internet connection has to be denied.

Batch processing system is configured to store non-rated CDRs, charge amounts of rated CDRs, and other information in a database 509. It is further configured to send sets of unrated CDRs to the rating component of the rating system for (batch) rating. For instance, this can be done when the workload of the rating system is low or a set of CDRs can be sent at an end of a billing cycle of a postpaid account related to the set.

The amount of forwarded unrated CDRs from the real time event driven rating system to the batch processing system per time unit time (e.g. second) may be used as an indicative workload parameter of the workload of the real time event driven rating system. The workload of the real time event driven rating system can be considered low, when the workload parameter is below a threshold value. Batch processing system can function as a billing system, i.e. it summarizes charge amounts and generates bills for users on a basis of the summarized charge amounts.

The sending of the sets of the unrated CDRs to the rating component can be done via web service 513. The web service can perform aggregating of CDRs for facilitating of their processing and/or apply special rules for aggregating. The aggregation can be performed according to the types of CDRs. For instance, CDRs of one type can be related to SMS sent by the user, CDRs of another type can be related to data volume downloaded during internet sessions, CDRs of yet another type can be related to duration of telephone calls. Thus instead of forwarding 5 CDRs related to one SMS each, it is more practical to substitute these 5 CDRs by one aggregate CDR related to 5 SMS. The CDRs related to data volume downloaded during internet sessions can be substituted by one aggregate CDR related to overall data volume downloaded during all internet sessions. The CDRs related to phone calls can be substituted by one aggregate CDR related to one phone call being as long all of the phone calls in the CDRs related to the phone calls. Moreover the web interface can have another remarkable functionality. Service providers can apply different rules for processing /aggregating of CDRs in the web service. For instance, if one of the providers wants to make a promotion of bonus discount for some of his services used by the users, the provider can simply modify the respective CDRs. In a case when providers want to make a first minute of any telephone call free of charge, than they can program the web interface to reduce duration of phone calls in CDRs related to the phone calls by one minute. In the other words service providers can apply various rules of customer loyalty programs based on actual consumption sate by analyzing and or modifying the non-charged CDRs being forwarded from the batch processing system to the rating system via the web service without reprogramming of the rating systems.

Monitoring of the workload of the real time event driven rating system and causing the web service to send the processed CDRs when the workload is below a threshold can be performed by the batch processing system. The monitoring of the workload is described above.

Alternatively, the batch processing system can have the aforementioned functionalities of the web service or it can perform aggregation/modification of CDRs in cooperation with the web service. For instance, the batch processing system can perform aggregation of the CDRs, while the web service can process CDRs according to different loyalty program rules.

This way of batch processing of CDRs has a number of distinct advantages. First of all CDRs of one type can be aggregated, and as a result thereof the rating of aggregate CDRs instead of big numbed discrete CDRs requires less resources of the rating systems 501 and 502. Second, the rating can be adapted in numerous indirect ways by programming the web interface and/or the batch processing system. This way of flexible adapting of rating is much better when compared with direct reprogramming of rating components which is very resource consuming because they operate in real time round the clock. The following protocols can be used for data communication (e.g. send/receive event record) between the web service 513 and other components of the system 514: Simple Object Access protocol (SOAP), or Diameter protocol, or File Transfer Protocol (FTP). The communicated data can be in one of the following formats: Comma Separated Values (CSV), Extensible Markup Language (XML), or Excel Microsoft Office Open XML Format Spreadsheet file (XLSX).

In order to perform the functionalities described above the web service can be configured to execute the following steps: receiving an event record from the batch processing system, wherein the event record comprises non-charged CDRs; executing a fist group of steps and/or a second group of steps; and sending the event record to the real time event driven rating system after the executing of the fist set of steps and/or the second set of steps. The first group of steps comprises the following steps: identifying CDRs of the same type in the event record, generating one aggregate CDR for all identified CDRs, and substituting the identified CDRs in the event record by the aggregate CDR, wherein the rating component is configured to determine the same charge amount for the aggregate CDR and for all identified CDRs. The second group of steps comprises the following steps: identifying one or more applicable user loyalty program rules for one or more of the CDRs in the event record; and modifying the one or more CDRs in the event record according to the one or more identified applicable user loyalty rules.

In order to perform the functionalities described above the batch processing system can be configured to perform the at least one of the following groups of steps after retrieving CDRs to be sent for charging from the database. One group of steps comprises the following steps: identifying the retrieved CDRs having the same type, and generating one aggregate CDR for all of the identified CDRs, wherein the aggregate CDR is sent to the real time event driven rating system instead of the identified CDRs having the same type. Another group of steps comprises the following steps: identifying one or more applicable user loyalty program rules for one or more of the retrieved CDRs, and modifying the one or more of the retrieved CDRs according to the one or more identified applicable user loyalty rules, wherein the one or more modified CDRs are sent to the real time event driven rating system instead of the one or more originally retrieved CDRs.

The database server 503 (or customer resource management system) distributes details of user accounts between different components of the system 514. For instance, a postpaid account of one of the users can comprises a service list of telecommunication services to be provided by one or more network components to said user, a respective rating information for determining charge amounts for CDRs generated in relation to using the telecommunication services of the services list, a respective billing cycle information determining schedule of the billing cycles for said user. In contrast to postpaid account a prepaid account does not have any billing cycle. Services (or at least some of them) are provided to the user of the prepaid account until the prepaid account has sufficient credit or a remaining credit of the account balance of the prepaid account is above a threshold. The prepaid account can comprise a services list of telecommunication services to be provided by one or more network components to a user having the prepaid account and rating information for determining charge amounts for CDRs generated in relation to using the telecommunication services of the services list. The rating information can comprise details of allowable QoS for different services depending on the account balance. For instance, incoming calls can be allowed even if the account balance of the prepaid account is below a threshold. Utilization of optimum distribution of account information between different components of the system 514 enables to achieve the following objectives in a synergetic way. First of all, only database server 503 stores complete information about user accounts. It performs data exchange with other components, which has very low volume of data traffic and does not require real-time performance. As a result thereof data exchange along these channels can be very well protected, which is of clear benefit, because customer sensitive information is distributed along these channels. Another advantage is that other data components comprise only fragments of information related to user account. Thus, when information related to user accounts, which is stored on any of system components except the database server 503, is stolen, for instance as a result of a hacker attack, it will comprise only fragments of user accounts. These fragments do not enable restoring complete information of accounts and inflicting serious damage to users. Second, the information of accounts is distributed among the system components on a "need to know" principle, wherein the account information needed for operation of the rating systems is reduced since these are the most heavily loaded components of the system.

The distribution of the account information can be supported by the following functionalities of the system components. The database server is configured to perform the steps of: sending the services list to one or more of the network components, sending the rating information to one or more of the real time event driven rating system, and sending the billing cycle information to the batch processing system. Each of the network components is configured to perform the steps of: receiving the services list from the database server; storing the received services list; and providing the services of the received list to a user having either the postpaid or the prepaid account comprising the stored services list. The real time event driven rating system is configured to perform the steps of: receiving the rating information from the database server; storing the received rating information, wherein the rating component is configured for rating the inputted CDR according to the stored rating information. The batch processing system is further configured to perform the steps of: receiving the billing cycle information from the database server; and storing the received billing cycle information.

The system 514 depicted on Fig. 5 has different requirements for data exchange coupling between its components, because only some of them operate in real time regime. For instance connection between the user and the real time event driven rating system has to operate in real time, because the QoS may depend on account balance of the prepaid account or on the history of usage of resources, for instance a prepaid or postpaid account can be limited to 3 SMS per month. In this case the real time event driven rating system has to monitor counters or other values being indicative of the history of usage of the resource and provide corresponding QoS in real time according to state of these counters or values. In the other words data transfer latency between the user and the respective real time event driven rating system has to be minimized. This can be achieved by selecting a proper chain of components cellular digital telecommunication network. For instance the user 511 can be connected to the digital cellular telecommunication network either via network component 505 (e.g. first base station) or via network component 506 (e.g. second base station), wherein both of them a connected to the rating component 501 a via common mediation system. The connection of the user 511 to the particular network component 505 or 506 can be determined by his current geographical location (e.g. different locations within an area, a city, or a province). The same applies to another user 510, who can have connection to the rating system either via network component 507 and mediation system 504 or via network component 508 and mediation system 504. When one of the users takes a long distance trip (e.g. a trip to another country) the real time event driven system rating system (502 or 501) and its periphery (505, 506, 500; or 507, 508, 504) can be changed as well.

On the other hand latency of data transfer between other components of the system 514 is not critical. Thus with independent of geographical location of users the same components 503, 514, 509, 513 can be used.

These requirements can be formulated as follows. If the system 514 comprises more than one real time event driven rating system then the real time event driven rating system, which data communicative coupling to the network component providing connection to the user, has the lowest data transfer latency in comparison with any other real time event driven rating system, is selected. On the other hand a data transfer latency of a the data communicative coupling between the batch processing system and the selected real time event driven rating system is higher than the data transfer latency of the data communicative coupling between the selected real time event driven rating system and the network component providing connection to the user.

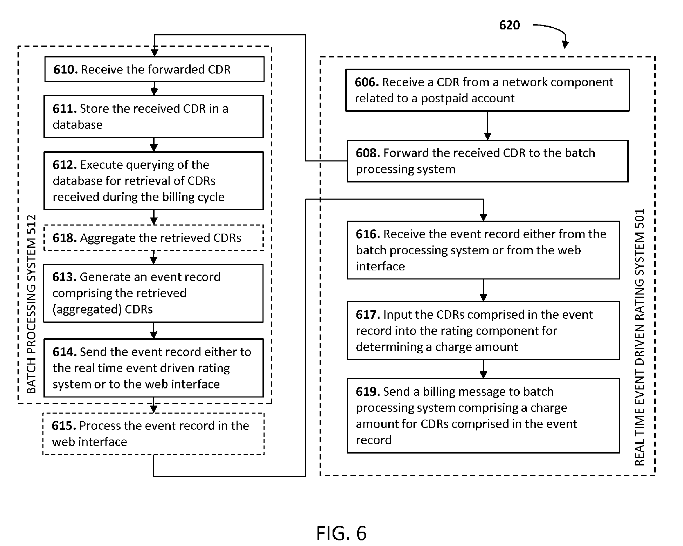

Fig. 6 illustrates a flow chart diagram 620 for a method of processing of CDRs using the system 514.

The flow chart diagram 620 illustrates processing of a CRD related to a postpaid account. In a process block 606 a CDR related to a usage of a service by a user having a postpaid account is received from the network component by the real time event driven rating system.

A process block 608 is executed after the process block 606. In the process block 608 the received CDR is forwarded to the batch processing system by the real time event driven rating system.

A process block 610 is executed after the process block 608. The forwarded CDR is received by the batch processing system.

A process block 611 is executed after the process block 610. In the process block 611 the batch processing system stores the CDR received from the real time even driven rating system in the database 509.

The following process blocks 612-614 are executed at an end of a billing cycle of the postpaid account. An optional process block 618 can be executed before the process block 613 and after the process block 612.

The process block 612 is executed after the process block 611. In the process block 613 a query of the database for retrieval of CDRs received during the billing cycle is performed. The billing cycle can be a billing cycle of one or more postpaid accounts.

If the optional process block 618 is executed after the process block 612, then aggregation/modification of at least some of the retrieved CDRs is performed as described above and the aggregate/modified CDRs are sent to the real time event driven real time system instead the original ones in the subsequent process block 613.

The process block 613 is executed either after the process block 612 or after the optional process block 618. In the process block 613 an event record comprising the retrieved CDRs is generated.

The process block 614 is executed after the process block 613. In the process block 614 the event record is sent to the real time event driven rating system.

An optional process block 615 can be executed after the process block 614. This process block is executed when the even records is sent via the web interface to the real time event driven rating system. When the CDRs in the event record a processed as described above, i.e. the CDRs in the event record are aggregated and/or loyalty rules are applied.

Process blocks 619, 616, and 616 are executed by the real time event driven rating system. The process block 616 is executed either after the optional process block 615 or after the process block 614. In the process block the event record is received either form the batch processing system or from the web interface.

The process block 617 is executed after the process block 616. In the process block 617 the CDRs comprised in the received event record are inputted into the rating component for determining a charge amount for CDRs comprised in the event record.

The process block 619 is executed after the process block 617. In the process block 619 a billing message comprising a charge amount for CDRs comprised in the event record is sent from the real time event driven rating system to the batch processing system. Afterwards the batch processing system can generate a bill for a user having postpaid account according to which the services were used and the CDRs of the event record were generated.

Processing of the event record results in a workload for the real time event driven rating system. In the process block 614 the event record can be sent to the real time event driven rating system by the batch processing when its workload low. The monitoring of the workload by the batch processing system is described above. If the process block 615 is executed, then the batch processing system can cause in this process block the web interface to send the event record to the real time event driven system when its workload is low.

Flow chart 615 illustrates processing by the real time event driven rating system CDR related to a usage of a service by a user having a prepaid account. In a process block 600 the CDR related to the usage of the service by the user having the prepaid account is received from the network component.

A process block 601 is executed after the process block 600. In the process block 601 the received CDR is inputted into the rating component for determining a charge amount for the received CDR.

A process block 602 is executed after the process block 601. In the process block 602 the prepaid account is charged by the charge amount. The message comprising details of the usage of the service and the charge amount can be sent to the batch processing system for generation of a bill for the user who has used the service.

A process block 603 is executed after the process block 602 if the remaining credit of the account balance of the prepaid account is below a threshold (e.g. zero). In the process block 603 an interruption message for interruption of the telecommunication service is generated. The interruption message can indicate that providing of the telecommunication service has to be stopped (e.g. telephone connection has to be terminated).

A process block 605 is executed after the process block 603 if the process block 603 is executed. In the process block 605 the interruption message is sent to the network component.

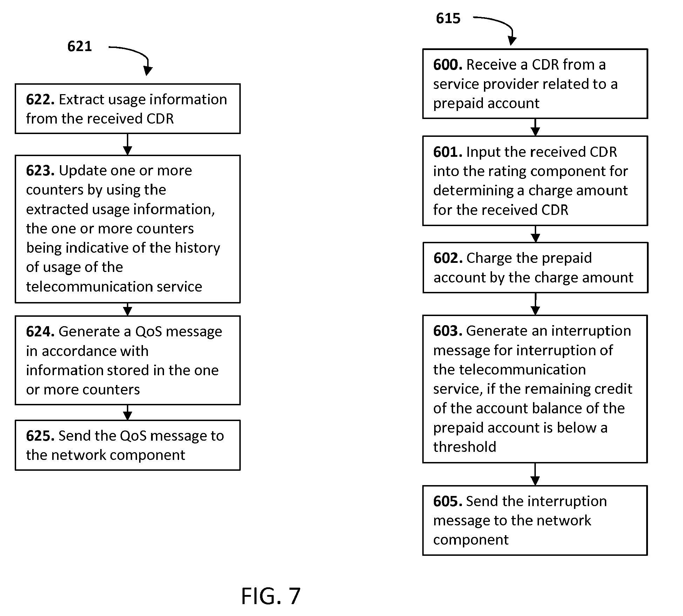

Fig. 7 illustrates a flow chart 621 of another method, when a QoS of the provided telecommunication resource depends on a prehistory of usage of this resource. For instance when a data volume downloaded by the user using an internet connection exceeds a limit, then connection speed of the internet connection has to be lowered.

In a process block 622 a usage information is extracted from the received CDR. For instance it can be data volume downloaded by the user.

A process block 623 is executed after the process block 622. In the process block 623 one or more counters are updated by using the extracted usage information. The one or more counters are indicative of the history of usage of the telecommunication service. For instance, the data volume downloaded by the user is added to a data volume counter where data volumes previously downloaded by the user a summed.

A process block 624 is executed after the process block 623. In the process block 624 a QoS message is generated in accordance with information stored in the one or more counters. For instance, if a value of the data volume counter is below the limit, then the QoS message indicates that the user can download data at the same speed as before. On the other hand, if a value of the data volume counter is above the limit, then the QoS message indicates that connection speed of the internet connection used by the user has to be lowered.

A process block 625 is executed after the process block 624. In the process block 625 the QoS message is sent to the network component. For instance it can be the network component providing the internet connection used by the user.

If one or more counters are used for registering of the usage of the resources used by a user having a postpaid account, then at least some of them are ought to be reset at an end of a billing cycle of the postpaid account. This can be done is various ways. For instance, the batch processing system can generate a reset message at the end of the billing cycle and send it to the real time event driven processing system. In response to receiving the reset message, the real time event driven rating system resets one more counters specified in the reset message. Alternatively, the real time event driven rating system can be configured to reset the one or more counters in response to receiving the event record. In this case, the event record has to be received by the real time event driven rating system at the end of the billing cycle without delays caused by workload optimization procedures described above.

The preceding figures and accompanying description illustrate example processes and computer implementable techniques. But example environments 100 and 514 (or their software or other components) contemplate using, implementing, or executing any suitable technique for performing these and other tasks. It will be understood that these processes are for illustration purposes only and that the described or similar techniques may be performed at any appropriate time, including concurrently, individually, in parallel, and/or in combination. In addition, many of the operations in these processes may take place simultaneously, concurrently, in parallel, and/or in different orders than as shown. Moreover, example environment 100 may use processes with additional, fewer and/or different operations, as long as the methods remain appropriate.

In other words, although this disclosure has been described in terms of certain implementations and generally associated methods, alterations and permutations of these implementations and methods will be apparent to those skilled in the art. Accordingly, the above description of example implementations does not define or constrain this disclosure. Other changes, substitutions, and alterations are also possible without departing from the spirit and scope of this disclosure.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, a FPGA, or an ASIC.

Computers suitable for the execution of a computer program can be based on general or special purpose microprocessors, both, or any other kind of CPU. Generally, a CPU will receive instructions and data from a read only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer readable media (transitory or non-transitory, as appropriate) suitable for storing computer program instructions and data include all forms of non volatile memory, media and memory devices, including by way of example semiconductor memory devices, e.g., erasable programmable read-only memory (EPROM), electrically-erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), LED (Light Emitting Diode), or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., as a data server, or that includes a middleware component, e.g., an application server, or that includes a front-end component, e.g., a client computer having a graphical user interface or a web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any implementation or on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results.

## Claims

1. A mobile digital cellular telecommunication system (514) comprising a network component (505, 506, 507, 508) configured to generate call detail records, CDRs, a real time event driven rating system (501, 502) and a batch processing system (512), the real time event driven rating system comprising a rating component (501 a, 502a) having an interface for inputting the CDRs and being configured for rating an inputted CDR, the real time event driven rating system being configured to perform the following steps in response to receiving of a CDR (606) from the network component for a telecommunication service provided to a user (510, 511):
• forwarding the received CDR to the batch processing system (608) if the received CDR is related to a postpaid account of the user (606);
• performing the following steps if the received CDR is related to a prepaid account of the user (600):
o inputting the received CDR into the rating component for determining a charge amount for the received CDR (601), and
o charging the prepaid account by the charge amount (602); and
• performing the following steps if the received CDR is related to the prepaid account of the user and a remaining credit of an account balance of the prepaid account is below a first threshold:
∘ generating an interruption message for interruption of the telecommunication service (603), and
∘ sending the interruption message to the network component (605);
the batch processing system being configured to perform the steps of:
• receiving the forwarded CDR (610), and
• storing the received CDR (611) in a database (509);
the batch processing system being further configured to perform the following steps at an end of a billing cycle of the postpaid account:
• querying the database for retrieval of CDRs received during the billing cycle (612),
• generating an event record, the event record comprising the retrieved CDRs (613), and
• sending the event record to the real time event driven rating system (614);
the real time event driven rating system being further configured to perform the following steps in response to receiving the event record from the batch processing system (616):
• inputting the CDRs comprised in the received event record into the rating component for determining a charge amount for CDRs comprised in the event record (617), and
• sending a billing message to the batch processing system comprising the charge amount for CDRs comprised in the event record (619).

2. The mobile digital cellular telecommunication system of claim 1, wherein the real time event driven rating system is further being configured to perform the following steps in response to the receiving of the CDR from the network component for the telecommunication service provided to the user if a quality of service, QoS, of the telecommunication service depends on a history of usage of the telecommunication service by the user:
• extracting usage information from the received CDR (622),
• updating one or more counters by using the extracted usage information, the one or more counters being indicative of the history of usage of the telecommunication service (623),
• generating a QoS message in accordance with information stored in the one or more counters (624), and
• sending the QoS message to the network component (625);
wherein the batch processing system is being further configured to perform the following step at the end of the billing cycle of the postpaid account:
• sending a reset counter message to the real time event driven rating system;
wherein the real time event driven rating system is further being configured to perform the following steps:
• receiving the reset counter message:
• in response to the receiving of the reset counter message resetting the one or more counters.

3. The mobile digital cellular telecommunication system of any one of the preceding claims, wherein the batch processing system is further configured to perform the step of:
• monitoring a volume of data transmitted per time unit from the real time event driven rating system to the batch processing system, wherein the data comprises the forwarded CDRs, wherein the sending of the event record to the real time event driven rating system is performed when the volume of the data transmitted per time unit is below a second threshold value.

4. The mobile digital cellular telecommunication system of any one of claims 1 or 2, wherein the sending of the event record to the real time event driven rating system is performed via a web service (513) being configured to perform the steps of (615):
• receiving the event record from the batch processing system;
• executing at least one of the following groups of steps,
wherein one group of steps comprises the following steps:
∘ identifying CDRs of the same type in the event record,
∘ generating one aggregate CDR for all of the identified CDRs, and
∘ substituting all of the identified CDRs in the event record by the aggregate CDR, wherein the rating component is configured to determine the same charge amount for the aggregate CDR and for all of the identified CDRs;
and another group of steps comprises the following steps:
∘ identifying one or more applicable user loyalty program rules for one or more of the CDRs in the event record, and
∘ modifying the one or more identified CDRs in the event record according to the one or more identified applicable user loyalty rules; and
• sending the event record to the real time event driven rating system after the performing of the at least one of the following groups of steps.

5. The mobile digital cellular telecommunication system of claim 4, wherein the batch processing system is further configured to perform the steps of:
• monitoring a volume of data transmitted per time unit from the real time event driven rating system to the batch processing system; and
• causing the web interface to execute the sending of the event record when the volume of the data transmitted per time unit is below a second threshold value.

6. The mobile digital cellular telecommunication system of claim 1, wherein the real time event driven rating system is further configured to perform the following steps in response to the receiving of the CDR from the network component for the telecommunication service provided to the user if a quality of service, QoS, of the telecommunication service depends on a history of usage of the telecommunication service by the user:
• extracting usage information from the received CDR (622),
• updating one or more counters by using the extracted usage information, the one or more counters being indicative of the history of usage of the telecommunication service (623),
• generating a QoS message in accordance with information stored in the one or more counters (624), and
• sending the QoS message to the network component (625);
wherein the real time event driven rating system is further configured to perform the following step in response to receiving the event record from the batch processing system:
• resetting the one or more counters.

7. The mobile digital cellular telecommunication system of one of the claims 1 to 6, wherein the batch processing system is further configured to execute at least one of the following groups of steps before the generating the event record (618):
wherein one group of steps comprises the following steps:
∘ identifying the retrieved CDRs having the same type,
∘ generating one aggregate CDR for all of the identified CDRs, and
∘ substituting all of the identified CDRs in the event record by the aggregate CDR, wherein the rating component is configured to determine the same charge amount for the aggregate CDR and for all of the identified CDRs;
and another group of steps comprises the following steps:
∘ identifying one or more applicable user loyalty program rules for one or more of the retrieved CDRs, and
∘ modifying the one or more of the retrieved CDRs according to the one or more identified applicable user loyalty rules, wherein the event record is generated in a way that it comprises the one or more modified retrieved CDRs.

8. The mobile digital cellular telecommunication system of any one of the preceding claims, the mobile digital cellular telecommunication system further comprising a database server (503) for storing prepaid accounts and postpaid accounts, wherein each of some of the postpaid accounts comprises a respective services list of telecommunication services to be provided by one or more network components to a user having the each of some of the postpaid accounts, a respective rating information for determining charge amounts for CDRs generated in relation to using the telecommunication services of the services list of the each of some of the postpaid accounts, a respective billing cycle information determining a schedule of the billing cycles of the each of some of the postpaid accounts, wherein each of some of the prepaid accounts comprises a respective services list of telecommunication services to be provided by one or more network components to a user having the each of some of the prepaid accounts and a respective rating information for determining charge amounts for CDRs generated in relation to using the telecommunication services of the services list of the each of some of the postpaid accounts,
wherein the database server is configured to perform the steps of:
• sending the services list to the respective one or more network components,
• sending the rating information to the respective the real time event driven rating system, and
• sending the billing cycle information to the batch processing system;
wherein the network component is configured to perform the steps of:
• receiving the services list from the database server,
• storing the received services list, and
• providing the services of the received list to a user having either the postpaid or the prepaid account comprising the stored services list;
wherein the real time event driven rating system is further configured to perform the steps of:
• receiving the rating information from the database server,
• storing the received rating information, wherein the rating component ᵢs configured for rating the inputted CDR according to the stored rating information;
wherein the batch processing system is further configured to perform the steps of:
• receiving the billing cycle information from the database server, and
• storing the received billing cycle information.

9. The mobile digital cellular telecommunication system of any of the preceding claims, the mobile digital cellular telecommunication system further comprising further real time event driven rating systems, wherein the network component is configured to send the CDRs to the real time event driven rating system, which data communicative coupling to the network component has the lowest data transfer latency in comparison with any other real time event driven rating system, wherein a data transfer latency of a data communicative coupling between the batch processing system and the real time event driven rating system, to which the network component is configured to send CDRs, is higher than the data transfer latency of the data communicative coupling used for the sending of the CDRs.

10. A computer-implemented method (620, 615) for processing of call detail records, CDRs, in a mobile digital cellular telecommunication system (514) comprising a network component (505, 506, 507, 508) configured to generate the CDRs, a real time event driven rating system (501, 502), and a batch processing system (512), the real time event driven rating system comprising a rating component having an interface for inputting the CDRs (501 a, 502a) and being configured for rating an inputted CDR, the method comprising the following steps performed by the real time event driven rating system in response to receiving of a CDR from the network component for a telecommunication service provided to a user (511, 510):
• forwarding the received CDR to the batch processing system (608) if the received CDR is related to a postpaid account of the user (606);
• performing the following steps if the received CDR is related to a prepaid account of the user (600):
∘ inputting the received CDR into the rating component for determining a charge amount for the received CDR (601), and
∘ charging the prepaid account by the charge amount (602); and
• performing the following steps if the received CDR is related to the prepaid account of the user and a remaining credit of an account balance of the prepaid account is below a first threshold:
∘ generating an interruption message for interruption of the telecommunication service (603), and
∘ sending the interruption message to the network component (605);
the method further comprising the following steps performed by the batch processing system:
• receiving the forwarded CDR (610), and
• storing the received CDR (611) in a database (509);
the method further comprising the following steps performed by the batch processing system at an end of a billing cycle of the postpaid account:
• querying the database for retrieval of CDRs received during the billing cycle (612),
• generating an event record, the event record comprising the retrieved CDRs (613), and
• sending the event record to the real time event driven rating system (614);
the method further comprising the following steps performed by the real time event driven rating system in response to receiving the event record from the batch processing system (616):
• inputting the CDRs comprised in the event record into the rating component for determining a charge amount for CDRs comprised in the event record (617), and
• sending a billing message to the batch processing system comprising the charge amount for CDRs comprised in the event record (619).

11. The computer-implemented method of claim 10, wherein the method further comprises the following steps performed by the real time event driven rating system in response to receiving of a CDR from the network component for a telecommunication service provided to a user if a quality of service, QoS, of the telecommunication service depends on a history of usage of the telecommunication service by the user:
• extracting usage information from the received CDR (622),
• updating one or more counters by using the extracted usage information, the one or more counters being indicative of the history of usage of the telecommunication service (623),
• generating a QoS message in accordance with information stored in the one or more counters (624), and
• sending the QoS message to the network component (625);
the method further comprising the following step performed by the batch processing system at an end of a billing cycle of the postpaid account:
• sending a reset counter message to the real time event driven rating system;
the method further comprising the following steps performed by the real time event driven rating system:
• receiving the reset counter message, and
• in response to the receiving of the reset counter message resetting the one or more counters.

12. The computer-implemented method of one of the claims 10 or 11, the method further comprising the following step performed by the batch processing system:
• monitoring a volume of data transmitted per time unit from the real time event driven rating system to the batch processing system, wherein the data comprises the forwarded CDRs, wherein the sending of the event record to the real time event driven rating system is performed when the volume of the data transmitted per time unit is below a second threshold value.

13. The computer-implemented method of one of the claims 10 or 11,wherein the sending of the event record to the real time event driven rating system is performed via a web service (513), wherein the method comprises the following steps performed by the web service (615):
• receiving the event record from the batch processing system;
• executing at least one of the following groups of steps,
wherein one group of steps comprises the following steps:
∘ identifying CDRs of the same type in the event record,
∘ generating one aggregate CDR for all of the identified CDRs, and
∘ substituting all of the identified CDRs in the event record by the aggregate CDR, wherein the rating component is configured to determine the same charge amount for the aggregate CDR and for all of the identified CDRs;
and another group of steps comprises the following steps:
∘ identifying one or more applicable user loyalty program rules for one or more of the CDRs in the event record, and
∘ modifying the one or more identified CDRs in the event record according to the one or more identified applicable user loyalty rules; and
• sending the event record to the real time event driven rating system after the performing of the at least one of the following groups of steps.

14. The computer-implemented method of any one of the claims 10-13, the mobile digital cellular telecommunication system further comprising a database server for storing prepaid accounts and postpaid accounts, wherein each of some of the postpaid accounts comprises a respective services list of telecommunication services to be provided by one or more network components to a user having the each of some of the postpaid accounts, a respective rating information for determining charge amounts for CDRs generated in relation to using the telecommunication services of the services list of the each of some of the postpaid accounts, a respective billing cycle information determining a schedule of the billing cycles of the each of some of the postpaid accounts, wherein each of some of the prepaid accounts comprises a respective services list of telecommunication services to be provided by one or more network components to a user having the each of some of the prepaid accounts and a respective rating information for determining charge amounts for CDRs generated in relation to using the telecommunication services of the services list of the each of some of the postpaid accounts,
wherein the method further comprises the following steps performed by database server:
• sending the services list to the respective one or more network components,
• sending the rating information to the respective the real time event driven rating system, and
• sending the billing cycle information to the batch processing system;
wherein the method further comprises the following steps performed by the network component:
• receiving the services list from the database server,
• storing the received services list, and
• providing the services of the received list to a user having either the postpaid or the prepaid account comprising the stored services list;
wherein the method further comprises the following steps performed by the real time event driven rating system:
• receiving the rating information from the database server,
• storing the received rating information, wherein the rating component is configured for rating the inputted CDR according to the stored rating information;
wherein the method further comprises the following steps performed by the batch processing system:
• receiving the billing cycle information from the database server, and
• storing the received billing cycle information.

15. A computer readable medium having stored thereon computer executable code for execution by computer processors controlling a mobile digital cellular telecommunication system, wherein execution of the instructions of the executable code causes the computer processors to execute the computer-implemented method of claims 10-14 on the mobile digital cellular telecommunication system.

## Patentansprüche

1. Mobiles digitales zellulares Telekommunikationssystem (514), das eine Netzwerkkomponente (505, 506, 507, 508), die zum Generieren von Kommunikationsdatensätzen (Call Data Records - CDR) konfiguriert ist, ein Echtzeitereignisgesteuertes Bewertungssystem (501, 502) und ein Batchverarbeitungssystem (512) aufweist, wobei das Echtzeit-ereignisgesteuerte Bewertungssystem eine Bewertungskomponente (501 a, 502a) aufweist, die eine Schnittstelle zur Eingabe der CDR hat, und zur Bewertung eines eingegebenen CDR konfiguriert ist, wobei das Echtzeit-ereignisgesteuerte Bewertungssystem zum Durchführen der folgenden Schritte als Reaktion auf den Empfang eines CDR (606) von der Netzwerkkomponente für einen einem Benutzer (510, 511) bereitgestellten Telekommunikationsdienst konfiguriert ist:
• Weiterleiten der CDR an das Batchverarbeitungssystem (608), falls der empfangene CDR mit einem Postpaid-Konto des Benutzers in Bezug steht (606);
• Durchführen der folgenden Schritte, falls der empfangene CDR mit einem Prepaid-Konto des Benutzers in Bezug steht (600):
∘ Eingeben des empfangenen CDR in die Bewertungskomponente zum Bestimmen eines Belastungsbetrags für den empfangenen CDR (601) und
∘ Belasten des Prepaid-Kontos mit dem Belastungsbetrag (602); und
• Durchführen der folgenden Schritte, falls der empfangene CDR mit dem Prepaid-Konto des Benutzers in Bezug steht und ein verbleibendes Guthaben eines Kontostands des Prepaid-Kontos unter einer ersten Schwelle liegt:
∘ Generieren einer Unterbrechungsnachricht zur Unterbrechung des Telekommunikationsdienstes (603) und
∘ Senden der Unterbrechungsnachricht an die Netzwerkkomponente (605);
wobei das Batchverarbeitungssystem zum Durchführen der folgenden Schritte konfiguriert ist:
• Empfangen des weitergeleiteten CDR (610) und
• Speichern des empfangenen CDR (611) in einer Datenbank (509);
wobei das Batchverarbeitungssystem ferner zum Durchführen der folgenden Schritte an einem Ende eines Abrechnungszeitraums des Postpaid-Kontos konfiguriert ist:
• Abfragen der Datenbank zum Abrufen von während des Abrechnungszeitraums empfangenen CDR (612),
• Generieren eines Ereignisdatensatzes, wobei der Ereignisdatensatz die abgerufenen CDR aufweist, (613) und
• Senden des Ereignisdatensatzes an das Echtzeit-ereignisgesteuerte Bewertungssystem (614);
wobei das Echtzeit-ereignisgesteuerte Bewertungssystem ferner zum Durchführen der folgenden Schritte als Reaktion auf den Empfang des Ereignisdatensatzes von dem Batchverarbeitungssystem (616) konfiguriert ist:
• Eingeben der in dem empfangenen Ereignisdatensatz enthaltenen CDR in die Bewertungskomponente zum Bestimmen eines Belastungsbetrags für in dem Ereignisdatensatz enthaltene CDR (617) und
• Senden einer Abrechnungsnachricht an das Batchverarbeitungssystem, die den Belastungsbetrag für in dem Ereignisdatensatz enthaltene CDR aufweist, (619).

2. Mobiles digitales zellulares Telekommunikationssystem nach Anspruch 1, wobei das Echtzeit-ereignisgesteuerte Bewertungssystem ferner zum Durchführen der folgenden Schritte als Reaktion auf den Empfang des CDR von der Netzwerkkomponente für den dem Benutzer bereitgestellten Telekommunikationsdienst, falls eine Dienstgüte (QoS) des Telekommunikationsdienstes von einer Historie der Nutzung des Telekommunikationsdienstes durch den Benutzer abhängt, konfiguriert ist:
• Entnehmen von Nutzungsinformationen aus dem empfangenen CDR (622),
• Aktualisieren von einem oder mehr Zählern unter Verwendung der entnommenen Nutzungsinformationen, wobei der eine oder die mehr Zähler die Nutzungshistorie des Telekommunikationsdienstes erkennen lassen, (623),
• Generieren einer QoS-Nachricht gemäß in dem einen oder den mehr Zählern gespeicherten Informationen (624) und
• Senden der QoS-Nachricht an die Netzwerkkomponente (625);
wobei das Batchverarbeitungssystem ferner zum Durchführen des folgenden Schritts am Ende des Abrechnungszeitraums des Postpaid-Kontos konfiguriert ist:
• Senden einer Zähler-Reset-Nachricht an das Echtzeit-ereignisgesteuerte Bewertungssystem;
wobei das Echtzeit-ereignisgesteuerte Bewertungssystem ferner zum Durchführen der folgenden Schritte konfiguriert ist:
• Empfangen der Zähler-Reset-Nachricht;
• Zurücksetzen des einen oder der mehr Zähler(s) als Reaktion auf den Empfang der Zähler-Reset-Nachricht.

3. Mobiles digitales zellulares Telekommunikationssystem nach einem der vorhergehenden Ansprüche, wobei das Batchverarbeitungssystem ferner zum Durchführen des folgenden Schritts konfiguriert ist:
• Überwachen einer pro Zeiteinheit von dem Echtzeit-ereignisgesteuerten Bewertungssystem an das Batchverarbeitungssystem übertragenen Datenmenge, wobei die Daten die weitergeleiteten CDR aufweisen, wobei das Senden des Ereignisdatensatzes an das Echtzeit-ereignisgesteuerte Bewertungssystem durchgeführt wird, wenn die pro Zeiteinheit übertragene Datenmenge unter einem zweiten Schwellenwert liegt.

4. Mobiles digitales zellulares Telekommunikationssystem nach einem der Ansprüche 1 oder 2, wobei das Senden des Ereignisdatensatzes an das Echtzeit-ereignisgesteuerte Bewertungssystem über einen Webdienst (513) durchgeführt wird, der zum Durchführen der folgenden Schritte (615) konfiguriert ist:
• Empfangen des Ereignisdatensatzes von dem Batchverarbeitungssystem;
• Ausführen von wenigstens einer der folgenden Schrittgruppen,
wobei eine Schrittgruppe die folgenden Schritte aufweist:
∘ Identifizieren von CDR desselben Typs im Ereignisdatensatz,
∘ Generieren eines Gesamt-CDR für alle identifizierten CDR und
∘ Ersetzen aller identifizierten CDR im Ereignisdatensatz durch den Gesamt-CDR, wobei die Bewertungskomponente konfiguriert ist, um für die Gesamt-CDR und für alle identifizierten CDR denselben Belastungsbetrag zu bestimmen;
und eine weitere Schrittgruppe die folgenden Schritte aufweist:
∘ Identifizieren von einer oder mehr anwendbaren Benutzertreueprogrammregeln für einen oder mehr der CDR im Ereignisdatensatz und
∘ Modifizieren des einen oder der mehr identifizierten CDR im Ereignisdatensatz gemäß der einen oder den mehr identifizierten anwendbaren Benutzertreueregeln; und
• Senden des Ereignisdatensatzes an das Echtzeit-ereignisgesteuerte Bewertungssystem nach Durchführen der wenigstens einen der folgenden Schrittgruppen.

5. Mobiles digitales zellulares Telekommunikationssystem nach Anspruch 4, wobei das Batchverarbeitungssystem ferner zum Durchführen der folgenden Schritte konfiguriert ist:
• Überwachen einer pro Zeiteinheit von dem Echtzeit-ereignisgesteuerten Bewertungssystem an das Batchverarbeitungssystem übertragenen Datenmenge; und
• Veranlassen der Webschnittstelle zum Ausführen des Sendens des Ereignisdatensatzes, wenn die pro Zeiteinheit übertragene Datenmenge unter einem zweiten Schwellenwert liegt.

6. Mobiles digitales zellulares Telekommunikationssystem nach Anspruch 1, wobei das Echtzeit-ereignisgesteuerte Bewertungssystem ferner zum Durchführen der folgenden Schritte als Reaktion auf den Empfang des CDR von der Netzwerkkomponente für den dem Benutzer bereitgestellten Telekommunikationsdienst, falls eine Dienstgüte (QoS) des Telekommunikationsdienstes von einer Historie der Nutzung des Telekommunikationsdienstes durch den Benutzer abhängt, konfiguriert ist:
• Entnehmen von Nutzungsinformationen aus dem empfangenen CDR (622),
• Aktualisieren von einem oder mehr Zählern unter Verwendung der entnommenen Nutzungsinformationen, wobei der eine oder die mehr Zähler die Nutzungshistorie des Telekommunikationsdienstes erkennen lassen, (623),
• Generieren einer QoS-Nachricht gemäß in dem einen oder den mehr Zählern gespeicherten Informationen (624) und
• Senden der QoS-Nachricht an die Netzwerkkomponente (625);
wobei das Echtzeit-ereignisgesteuerte Bewertungssystem ferner zum Durchführen des folgenden Schritts als Reaktion auf den Empfang des Ereignisdatensatzes von dem Batchverarbeitungssystem konfiguriert ist:
• Zurücksetzen des einen oder der mehr Zähler(s).

7. Mobiles digitales zellulares Telekommunikationssystem nach einem der Ansprüche 1 bis 6, wobei das Batchverarbeitungssystem ferner zum Ausführen von wenigstens einer der folgenden Schrittgruppen vor Generieren des Ereignisdatensatzes (618) konfiguriert ist:
wobei eine Schrittgruppe die folgenden Schritte aufweist:
∘ Identifizieren der abgerufenen CDR desselben Typs,
∘ Generieren eines Gesamt-CDR für alle identifizierten CDR und
∘ Ersetzen aller identifizierten CDR im Ereignisdatensatz durch die Gesamt-CDR, wobei die Bewertungskomponente zum Bestimmen desselben Belastungsbetrags für den Gesamt-CDR und für alle identifizierten CDR konfiguriert ist;
und eine weitere Schrittgruppe die folgenden Schritte aufweist:
∘ Identifizieren von einer oder mehr anwendbaren Benutzertreueprogrammregeln für einen oder mehr der abgerufenen CDR und
∘ Modifizieren des einen oder der mehr abgerufenen CDR im Ereignisdatensatz gemäß der einen oder mehr identifizierten anwendbaren Benutzertreueregeln, wobei der Ereignisdatensatz so generiert wird, dass er den einen oder die mehr modifizierten abgerufenen CDR aufweist.

8. Mobiles digitales zellulares Telekommunikationssystem nach einem der vorhergehenden Ansprüche, wobei das mobile digitale zellulare Telekommunikationssystem ferner einen Datenbankserver (503) zum Speichern von Prepaid-Konten und Postpaid-Konten aufweist, wobei jedes von einigen der Postpaid-Konten eine jeweilige Dienstliste von Telekommunikationsdiensten, die einem Benutzer, der das jede von einigen der Postpaid-Konten hat, von einer oder mehr Netzwerkomponenten bereitzustellen sind, eine jeweilige Bewertungsinformation zum Bestimmen von Belastungsbeträgen für im Verhältnis zur Benutzung der Telekommunikationsdienste der Dienstliste des jeden der einigen der Postpaid-Konten generierte CDR, eine jeweilige Abrechnungszeitrauminformation, die einen Zeitplan der Abrechnungszeiträume des jeden von einigen der Postpaid-Konten bestimmt, aufweist, wobei jedes von einigen der Prepaid-Konten eine jeweilige Dienstliste der Telekommunikationsdienste, die einem Benutzer, der das jede von einigen der Prepaid-Konten hat, von einer oder mehr Netzwerkkomponenten bereitzustellen sind, und eine jeweilige Bewertungsinformation zum Bestimmen von Belastungsbeträgen für im Verhältnis zur Benutzung der Telekommunikationsdienste der Dienstliste des jeden von einigen der Postpaid-Konten generierte CDR aufweist,
wobei der Datenbankserver zum Durchführen der folgenden Schritte konfiguriert ist:
• Senden der Dienstliste an die jeweilige eine oder mehr Netzkomponenten,
• Senden der Bewertungsinformation an das jeweilige Echtzeit-ereignisgesteuerte Bewertungssystem und
• Senden der Abrechnungszeitrauminformation an das Batchverarbeitungssystem;
wobei die Netzwerkkomponente zum Durchführen der folgenden Schritte konfiguriert ist:
• Empfangen der Dienstliste vom Datenbankserver,
• Speichern der empfangenen Dienstliste und
• Bereitstellen der Dienste der empfangenen Liste einem Benutzer, der entweder das Postpaid- oder das Prepaid-Konto hat, das die gespeicherte Dienstliste aufweist;
wobei das Echtzeit-ereignisgesteuerte Bewertungssystem ferner zum Durchführen der folgenden Schritte konfiguriert ist:
• Empfangen der Bewertungsinformation vom Datenbankserver,
• Speichern der empfangenen Bewertungsinformation, wobei die Bewertungskomponente zum Bewerten des eingegebenen CDR gemäß der gespeicherten Bewertungsinformation konfiguriert ist;
wobei das Batchverarbeitungssystem ferner zum Durchführen der folgenden Schritte konfiguriert ist:
• Empfangen der Abrechnungszeitrauminformation vom Datenbankserver und
• Speichern der empfangenen Abrechnungszeitrauminformation.

9. Mobiles digitales zellulares Telekommunikationssystem nach einem der vorhergehenden Ansprüche, wobei das mobile digitale zellulare Telekommunikationssystem ferner weitere Echtzeit-ereignisgesteuerte Bewertungssysteme aufweist, wobei die Netzwerkkomponente zum Senden der CDR an das Echtzeit-ereignisgesteuerte Bewertungssystem konfiguriert ist, dessen datenübertragungsfähige Kopplung an die Netzwerkkomponente die im Vergleich mit jedwedem anderen Echtzeit-ereignisgesteuerten Bewertungssystem die niedrigste Datentransferlatenzzeit hat, wobei eine Datentransferlatenzzeit einer datenübertragungsfähigen Kopplung zwischen dem Batchverarbeitungssystem und dem Echtzeit-ereignisgesteuerten Bewertungssystem, an das die Netzwerkkomponente konfigurationsgemäß CDR sendet, größer als die Datentransferlatenzzeit der datenübertragungsfähigen Kopplung ist, die zum Senden der CDR verwendet wird.

10. Computerimplementiertes Verfahren (620, 615) zum Verarbeiten von Kommunikationsdatensätzen (CDR) in einem mobilen digitalen zellularen Telekommunikationssystem (514), das eine Netzwerkkomponente (505, 506, 507, 508), die zum Generieren der CDR konfiguriert ist, ein Echtzeit-ereignisgesteuertes Bewertungssystem (501, 502) und ein Batchverarbeitungssystem (512) aufweist, wobei das Echtzeit-ereignisgesteuerte Bewertungssystem eine Bewertungskomponente aufweist, die eine Schnittstelle zur Eingabe der CDR (501 a, 502a) hat, und zur Bewertung eines eingegebenen CDR konfiguriert ist, wobei das Verfahren die folgenden Schritte aufweist, die von dem Echtzeit-ereignisgesteuerten Bewertungssystem als Reaktion auf den Empfang eines CDR von der Netzwerkkomponente für einen einem Benutzer (511, 510) bereitgestellten Telekommunikationsdienst durchgeführt werden:
• Weiterleiten der empfangenen CDR an das Batchverarbeitungssystem (608), falls der empfangene CDR mit einem Postpaid-Konto des Benutzers (606) in Bezug steht;
• Durchführen der folgenden Schritte, falls der empfangene CDR mit einem Prepaid-Konto des Benutzers in Bezug steht (600):
∘ Eingeben des empfangenen CDR in die Bewertungskomponente zum Bestimmen eines Belastungsbetrags für den empfangenen CDR (601) und
∘ Belasten des Prepaid-Kontos mit dem Belastungsbetrag (602); und
• Durchführen der folgenden Schritte, falls der empfangene CDR mit dem Prepaid-Konto des Benutzers in Bezug steht und ein verbleibendes Guthaben eines Kontostands des Prepaid-Kontos unter einer ersten Schwelle liegt:
∘ Generieren einer Unterbrechungsnachricht zur Unterbrechung des Telekommunikationsdienstes (603) und
∘ Senden der Unterbrechungsnachricht an die Netzwerkkomponente (605);
wobei das Verfahren ferner die folgenden vom Batchverarbeitungssystem durchgeführten Schritte aufweist:
• Empfangen des weitergeleiteten CDR (610) und
• Speichern des empfangenen CDR (611) in einer Datenbank (509);
wobei das Verfahren ferner die folgenden Schritte aufweist, die vom Batchverarbeitungssystem an einem Ende eines Abrechnungszeitraums des Postpaid-Kontos durchgeführt werden:
• Abfragen der Datenbank zum Abrufen von während des Abrechnungszeitraums empfangenen CDR (612),
• Generieren eines Ereignisdatensatzes, wobei der Ereignisdatensatz die abgerufenen CDR aufweist, (613) und
• Senden des Ereignisdatensatzes an das Echtzeit-ereignisgesteuerte Bewertungssystem (614);
wobei das Verfahren ferner die folgenden Schritte aufweist, die vom Echtzeit-ereignisgesteuerten Bewertungssystem als Reaktion auf den Empfang des Ereignisdatensatzes von dem Batchverarbeitungssystem (616) durchgeführt werden:
• Eingeben der in dem empfangenen Ereignisdatensatz enthaltenen CDR in die Bewertungskomponente zum Bestimmen eines Belastungsbetrags für in dem Ereignisdatensatz enthaltene CDR (617) und
• Senden einer Abrechnungsnachricht an das Batchverarbeitungssystem, die den Belastungsbetrag für in dem Ereignisdatensatz enthaltene CDR aufweist, (619).

11. Computerimplementiertes Verfahren nach Anspruch 10, wobei das Verfahren ferner die folgenden Schritte aufweist, die von dem Echtzeit-ereignisgesteuerten Bewertungssystem als Reaktion auf den Empfang eines CDR von der Netzwerkkomponente für einen einem Benutzer bereitgestellten Telekommunikationsdienst durchgeführt werden, falls eine Dienstgüte (QoS) des Telekommunikationsdienstes von einer Historie der Nutzung des Telekommunikationsdienstes durch den Benutzer abhängt:
• Entnehmen von Nutzungsinformationen aus dem empfangenen CDR (622),
• Aktualisieren von einem oder mehr Zählern unter Verwendung der entnommenen Nutzungsinformationen, wobei der eine oder die mehr Zähler die Nutzungshistorie des Telekommunikationsdienstes erkennen lassen, (623),
• Generieren einer QoS-Nachricht gemäß in dem einen oder den mehr Zählern gespeicherten Informationen (624) und
• Senden der QoS-Nachricht an die Netzwerkkomponente (625);
wobei das Verfahren ferner den folgenden Schritt aufweist, der vom Batchverarbeitungssystem an einem Ende eines Abrechnungszeitraums des Postpaid-Kontos durchgeführt wird:
• Senden einer Zähler-Reset-Nachricht an das Echtzeit-ereignisgesteuerte Bewertungssystem;
wobei das Verfahren ferner die folgenden vom Echtzeit-ereignisgesteuerten Bewertungssystem durchgeführten Schritte aufweist:
• Empfangen der Zähler-Reset-Nachricht;
• Zurücksetzen des einen oder der mehr Zähler(s) als Reaktion auf den Empfang der Zähler-Reset-Nachricht.

12. Computerimplementiertes Verfahren nach einem der Ansprüche 10 oder 11, wobei das Verfahren ferner den folgenden vom Batchverarbeitungssystem durchgeführten Schritt aufweist:
• Überwachen einer pro Zeiteinheit von dem Echtzeit-ereignisgesteuerten Bewertungssystem an das Batchverarbeitungssystem übertragenen Datenmenge, wobei die Daten die weitergeleiteten CDR aufweisen, wobei das Senden des Ereignisdatensatzes an das Echtzeit-ereignisgesteuerte Bewertungssystem durchgeführt wird, wenn die pro Zeiteinheit übertragene Datenmenge unter einem zweiten Schwellenwert liegt.

13. Computerimplementiertes Verfahren nach einem der Ansprüche 10 oder 11, wobei das Senden des Ereignisdatensatzes an das Echtzeit-ereignisgesteuerte Bewertungssystem über einen Webdienst (513) durchgeführt wird, wobei das Verfahren die folgenden vom Webdienst durchgeführten Schritte (615) aufweist:
• Empfangen des Ereignisdatensatzes von dem Batchverarbeitungssystem;
• Ausführen von wenigstens einer der folgenden Schrittgruppen,
wobei eine Schrittgruppe die folgenden Schritte aufweist:
o Identifizieren von CDR desselben Typs im Ereignisdatensatz,
∘ Generieren eines Gesamt-CDR für alle identifizierten CDR und
∘ Ersetzen aller identifizierten CDR im Ereignisdatensatz durch den Gesamt-CDR, wobei die Bewertungskomponente konfiguriert ist, um für die Gesamt-CDR und für alle identifizierten CDR denselben Belastungsbetrag zu bestimmen;
und eine weitere Schrittgruppe die folgenden Schritte aufweist:
∘ Identifizieren von einer oder mehr anwendbaren Benutzertreueprogrammregeln für einen oder mehr der CDR im Ereignisdatensatz und
∘ Modifizieren des einen oder der mehr identifizierten CDR im Ereignisdatensatz gemäß der einen oder mehr identifizierten anwendbaren Benutzertreueregeln, und
• Senden des Ereignisdatensatzes an das Echtzeit-ereignisgesteuerte Bewertungssystem nach Durchführen der wenigstens einen der folgenden Schrittgruppen.

14. Computerimplementiertes Verfahren nach einem der Ansprüche 10 bis 13, wobei das mobile digitale zellulare Telekommunikationssystem ferner einen Datenbankserver zum Speichern von Prepaid-Konten und Postpaid-Konten aufweist, wobei jedes von einigen der Postpaid-Konten eine jeweilige Dienstliste von Telekommunikationsdiensten, die einem Benutzer, der das jede von einigen der Postpaid-Konten hat, von einer oder mehr Netzwerkomponenten bereitzustellen sind, eine jeweilige Bewertungsinformation zum Bestimmen von Belastungsbeträgen für im Verhältnis zur Benutzung der Telekommunikationsdienste der Dienstliste des jeden der einigen der Postpaid-Konten generierte CDR, eine jeweilige Abrechnungszeitrauminformation, die einen Zeitplan der Abrechnungszeiträume des jeden von einigen der Postpaid-Konten bestimmt, aufweist, wobei jedes von einigen der Prepaid-Konten eine jeweilige Dienstliste der Telekommunikationsdienste, die einem Benutzer, der das jede von einigen der Prepaid-Konten hat, von einer oder mehr Netzwerkkomponenten bereitzustellen sind, und eine jeweilige Bewertungsinformation zum Bestimmen von Belastungsbeträgen für im Verhältnis zur Benutzung der Telekommunikationsdienste der Dienstliste des jeden von einigen der Postpaid-Konten generierte CDR aufweist,
wobei das Verfahren ferner die folgenden vom Datenbankserver durchgeführten Schritte aufweist:
• Senden der Dienstliste an die jeweilige eine oder mehr Netzkomponenten,
• Senden der Bewertungsinformation an das jeweilige Echtzeit-ereignisgesteuerte Bewertungssystem und
• Senden der Abrechnungszeitrauminformation an das Batchverarbeitungssystem;
wobei das Verfahren ferner die folgenden von der Netzwerkkomponente durchgeführten Schritte aufweist:
• Empfangen der Dienstliste vom Datenbankserver,
• Speichern der empfangenen Dienstliste und
• Bereitstellen der Dienste der empfangenen Liste einem Benutzer, der entweder das Postpaid- oder das Prepaid-Konto hat, das die gespeicherte Dienstliste aufweist;
wobei das Verfahren ferner die folgenden vom Echtzeit-ereignisgesteuerten Bewertungssystem durchgeführten Schritte aufweist:
• Empfangen der Bewertungsinformation vom Datenbankserver,
• Speichern der empfangenen Bewertungsinformation, wobei die Bewertungskomponente zum Bewerten des eingegebenen CDR gemäß der gespeicherten Bewertungsinformation konfiguriert ist;
wobei das Verfahren ferner die folgenden vom Batchverarbeitungssystem durchgeführten Schritte aufweist:
• Empfangen der Abrechnungszeitrauminformation vom Datenbankserver und
• Speichern der empfangenen Abrechnungszeitrauminformation.

15. Rechnerlesbarer Datenträger, auf dem computerausführbarer Code zur Ausführung durch Rechnerprozessoren, die ein mobiles digitales zellulares Telekommunikationssystem steuern, gespeichert sind, wobei dieAusführung der Anweisungen des ausführbaren Codes die Rechnerprozessoren zur Ausführung des rechnerimplementierten Verfahrens nach den Ansprüchen 10 bis 14 am mobilen digitalen zellularen Telekommunikationssystem veranlasst.

## Revendications

1. Système de télécommunication cellulaire numérique mobile (514) comprenant un composant réseau (505,506, 507, 508) configuré pour générer des enregistrements détaillés d'appels, CDR, un système de notation entraîné en temps réel par un événement (501, 502) et un système de traitement par lots (512), le système de notation entraîné en temps réel par un événement comprenant un composant de notation (501a, 502a) ayant une interface pour introduire les CDR et étant configuré pour noter un CDR introduit, le système de notation entraîné en temps réel par un événement étant configuré pour réaliser les étapes suivantes en réponse à la réception d'un CDR (606) en provenance du composant réseau d'un service de télécommunication mis à la disposition d'un utilisateur (510,511):
• transfert du CDR reçu vers le système de traitement par lots (608) si le CDR reçu est associé à un compte post-payé de l'utilisateur (606) ;
• réalisation des étapes suivantes si le CDR reçu est associé à un compte prépayé de l'utilisateur (600) ;
∘ introduction du CDR reçu dans le composant de notation pour déterminer le montant à payer pour le CDR reçu (601), et
∘ facturation du montant à payer (602) sur le compte prépayé ; et
• réalisation des étapes suivantes si le CDR reçu est associé au compte prépayé de l'utilisateur et si un crédit restant d'un solde de compte du compte prépayé est en dessous d'un premier seuil :
∘ création d'un message d'interruption pour interrompre le service de télécommunication (603), et
∘ envoi du message d'interruption au composant réseau (605) ;
le système de traitement par lots étant configuré pour réaliser les étapes :
• de réception du CDR transféré (610), et de
• stockage du CDR reçu (611) dans une base de données (509) ;
le système de traitement par lots étant en outre configuré pour réaliser les étapes suivantes à la fin d'un cycle de facturation du compte post-payé :
• interrogation de la base de données pour l'extraction des CDR reçus au cours du cycle de facturation (612),
• création d'un enregistrement de l'événement, l'enregistrement de l'événement comprenant les CDR extraits (613), et
• envoi de l'enregistrement de l'événement au système de notation entraîné en temps réel par un événement (614) ;
le système de notation entraîné en temps réel par un événement étant en outre configuré pour réaliser les étapes suivantes en réponse à la réception de l'enregistrement de l'événement en provenance du système de traitement par lots (616) :
• introduction des CDR compris dans l'enregistrement de l'événement dans le composant de notation pour déterminer un montant à payer pour les CDR compris dans l'enregistrement de l'événement (617), et
• envoi d'un message de facturation vers le système de traitement par lots comprenant le montant à payer pour les CDR compris dans l'enregistrement de l'événement (619).

2. Système de télécommunication cellulaire numérique mobile selon la revendication 1, dans lequel le système de notation entraîné en temps réel par un événement est en outre configuré pour réaliser les étapes suivantes en réponse à la réception des CDR en provenance du composant réseau pour le service de télécommunication mis à la disposition de l'utilisateur si une qualité de service, QoS, du service de télécommunication dépend de l'historique de l'utilisation du service de télécommunication par l'utilisateur :
• extraction de l'information d'utilisation en provenance du CDR reçu (622),
• mise à jour d'un compteur unique ou de plusieurs compteurs en utilisant l'information d'utilisation extraite, l'unique compteur ou les compteurs multiple étant révélateurs de l'historique de l'utilisation du service de télécommunication (623),
• création d'un message QoS conformément à l'information stockée dans l'unique compteur ou dans les multiples compteurs (624), et
• envoi du message QoS vers le composant réseau (625) ;
dans lequel le système de traitement par lots est en outre configuré pour réaliser l'étape suivante à la fin du cycle de facturation du compte post-payé :
• envoi d'un message de réinitialisation du compteur vers le système de notation entraîné en temps réel par un événement ;
où le système de notation entraîné en temps réel par un événement est en outre configuré pour réaliser les étapes suivantes :
• réception du message de réinitialisation du compteur ;
• en réponse à la réception du message de réinitialisation du compteur, réinitialisation de l'unique compteur ou des multiples compteurs.

3. Système de télécommunication cellulaire numérique mobile selon l'une quelconque des revendications précédentes, dans lequel le système de traitement par lots est en outre configuré pour réaliser l'étape de :
• contrôle d'un volume de données transmis par unité de temps en provenance du système de notation entraîné en temps réel par un événement en en direction du système de traitement par lots, où les données comprennent les CDR transférés, où l'envoi de l'enregistrement de l'événement vers le système de notation entraîné en temps réel par un événement est réalisé lorsque le volume des données transmises par unité de temps est en dessous d'une seconde valeur de seuil.

4. Système de télécommunication cellulaire numérique mobile selon l'une quelconque des revendications 1 ou 2, dans lequel l'envoi de l'enregistrement de l'événement vers le système de notation entraîné en temps réel par un événement est réalisé par l'intermédiaire d'un service en ligne (513) qui est configuré pour réaliser les étapes (615) :
• de réception de l'enregistrement de l'événement en provenance du système de traitement par lots ;
• d'exécution d'au moins un seul des groupes d'étapes suivants, où le seul groupe d'étapes comprend les étapes suivantes :
o identification des CDR du même type dans l'enregistrement de l'événement,
∘ création d'un CDR composite pour tous les CDR identifiés, et
∘ remplacement de tous les CDR identifiés dans l'enregistrement de l'événement par le CDR composite, où le composant de notation est configuré pour déterminer le même montant à payer pour le CDR composite et pour tous les CDR identifiés ;
et un autre groupe d'étapes comprend les étapes suivantes :
∘ identification d'une seule ou de plusieurs règles du programme de fidélité de l'utilisateur applicable(s) à un CDR ou à de multiples CDR dans l'enregistrement de l'événement, et
∘ modification de l'unique CDR ou de plusieurs parmi les CDR identifié(s) dans l'enregistrement de l'événement selon la règle ou les multiples règles de fidélisation de l'utilisateur applicable(s) ; et
• envoi de l'enregistrement de l'événement vers le système de notation entraîné en temps réel par un événement après la réalisation d'au moins l'un des groupes d'étapes suivants.

5. Système de télécommunication cellulaire numérique mobile selon la revendication 4, dans lequel le système de traitement par lots est en outre configuré pour réaliser les étapes :
• de contrôle d'un volume de données transmis par unité de temps en provenance du système de notation entraîné en temps réel par un événement vers le système de traitement par lots ; et
• de déclenchement par l'interface en ligne pour l'exécution de l'envoi de l'enregistrement de l'événement lorsque le volume des données transmis par unité de temps est en dessous d'une seconde valeur de seuil.

6. Système de télécommunication cellulaire numérique mobile selon la revendication 1, dans lequel le système de notation entraîné en temps réel par un événement est en outre configuré pour réaliser les étapes suivantes en réponse à la réception du CDR en provenance du composant réseau pour le service de télécommunication mis à la disposition de l'utilisateur si une qualité de service, QoS, du service de télécommunication dépend de l'historique de l'utilisation du service de télécommunication par l'utilisateur :
• extraction de l'information d'usage depuis le CDR reçu (622),
• mise à jour du seul compteur ou de plusieurs compteurs en utilisant l'information d'usage extraite, le seul compteur ou les multiples compteurs étant révélateur(s) de l'historique de l'utilisation du service de télécommunication (623),
• création d'un message QoS conformément à l'information stockée dans le seul compteur ou les multiples compteurs (624), et
• envoi du message QoS vers le composant réseau (625) ;
dans lequel le système de notation entraîné en temps réel par un événement est en outre configuré pour réaliser l'étape suivante en réponse à la réception de l'enregistrement de l'événement en provenance du système de traitement par lots :
• réinitialisation du seul compteur ou des multiples compteurs.

7. Système de télécommunication cellulaire numérique mobile selon l'une des revendications 1 à 6, dans lequel le système est en outre configuré pour exécuter au moins un seul groupe parmi les groupes d'étapes suivants avant la création de l'enregistrement de l'événement (618) :
où le seul groupe d'étapes comprend les étapes suivantes :
∘ identification des CDR extraits ayant le même type,
∘ création d'un CDR composite pour tous les CDR identifiés, et
∘ remplacement de tous les CDR identifiés dans l'enregistrement de l'événement par le CDR composite, où le composant de notation est configuré pour déterminer le même montant à payer pour le CDR composite et pour tous les CDR identifiés ;
et un autre groupe d'étapes comprend les étapes suivantes :
∘ identification d'une seule règle ou de plusieurs règles du programme de fidélité de l'utilisateur applicable(s) pour un CDR ou plusieurs parmi les CDR extraits, et
∘ modification du seul CDR ou des multiples CDR extraits selon la règle ou les multiples règles de fidélisation de l'utilisateur applicable(s), où l'enregistrement de l'événement est généré de manière à ce qu'il comprenne le seul CDR ou les multiples CDR extraits.

8. Système de télécommunication cellulaire numérique mobile selon l'une quelconque des revendications précédentes, le système de télécommunication cellulaire numérique mobile comprenant en outre un serveur de base de données (503) pour le stockage de comptes prépayés et de comptes post-payés, dans lequel un compte respectif parmi certains comptes post-payés comprend une liste de services respectifs des services de télécommunication à mettre à la disposition, par un ou plusieurs composants réseau, d'un utilisateur ayant le compte respectif parmi certains comptes post-payés, une information de notation respective pour déterminer les montants à payer pour les CDR générés en liaison avec l'utilisation des services de télécommunication de la liste des services du compte respectif parmi certains des comptes post-payés, une information du cycle respectif de facturation déterminant le calendrier des cycles de facturation du compte respectif parmi certains des comptes post-payés, où le compte respectif parmi certains des comptes post-payés comprend une liste des services respectifs des services de télécommunication à mettre à la disposition, par un ou plusieurs composants réseau, de l'utilisateur qui a le compte respectif parmi certains des comptes prépayés et l'information de notation respective pour déterminer les montants à payer des CDR générés en liaison avec l'utilisation des services de télécommunication de la liste des services du compte respectif parmi certains des comptes post-payés,
dans lequel le serveur de la base de données est configuré pour réaliser les étapes :
• d'envoi de la liste des services vers le seul composant ou les plusieurs composants réseau respectif(s),
• d'envoi de l'information de notation vers le système respectif de notation entraîné en temps réel par un événement, et
• d'envoi de l'information du cycle de facturation vers le système de traitement par lots ;
dans lequel le composant réseau est configuré pour réaliser les étapes :
• de réception de la liste des services en provenance du serveur de la base de données,
• de stockage de la liste des services reçue, et
• de mise à la disposition de l'utilisateur des services de la liste reçue ayant soit un compte post payé soit un compte prépayé comprenant la liste des services stockée ;
dans lequel le système de notation entraîné en temps réel par un événement est en outre configuré pour réaliser les étapes :
• de réception de l'information de notation en provenance du serveur de la base de données,
• de stockage de l'information de notation reçue, où le composant de notation est configuré pour noter le CDR introduit selon l'information de notation stockée ;
dans lequel le système de traitement par lots est en outre configuré pour réaliser les étapes :
• de réception de l'information du cycle de facturation en provenance du serveur de la base de données, et
• de stockage de l'information du cycle de facturation reçue.

9. Système de télécommunication cellulaire numérique mobile selon l'une quelconque des revendications précédentes, le système de télécommunication cellulaire numérique mobile comprenant en outre des systèmes de notation entraîné en temps réel par un événement, dans lequel le composant réseau est configuré pour envoyer les CDR vers le système de notation entraîné en temps réel par un événement, dont le couplage de la communication des données avec le composant réseau a la latence de transfert des données la plus faible par rapport à n'importe quel autre système de notation entraîné en temps réel par un événement, où une latence de transfert des données d'un couplage de la communication des données entre le système de traitement par lots et le système de notation entraîné en temps réel par un événement, dans lequel le composant réseau est configuré pour envoyer des CDR, est plus élevée que la latence de transfert des données du couplage de la communication des données utilisé pour l'envoi des CDR.

10. Procédé mis en oeuvre par ordinateur (620, 615) pour traiter des enregistrements de détails des appels, CDR, dans un système de télécommunication cellulaire numérique mobile (514) comprenant un composant réseau (505, 506, 507, 508) configuré pour générer les CDR, un système de notation entraîné en temps réel par un événement (501, 502), et un système de traitement par lots (512), le système de notation entraîné en temps réel par un événement comprenant un composant de notation ayant une interface pour l'introduction des CDR (501 a, 502a) et étant configurée pour noter un CDR introduit, le procédé comprenant les étapes suivantes réalisées par le système de notation entraîné en temps réel par un événement en réponse à la réception d'un CDR en provenance du composant réseau pour un service de télécommunication mis à la disposition d'un utilisateur (511, 510) :
• transfert du CDR reçu vers le système de traitement par lots (608) si le CDR reçu est en liaison avec un compte post-payé de l'utilisateur (606) ;
• réalisation des étapes suivantes si le CDR reçu est en liaison avec un compte prépayé de l'utilisateur (600) :
o introduction du CDR reçu dans le composant de notation pour déterminer le montant à payer pour le CDR reçu (601), et
o facturation du compte prépayé du montant à payer (602) ; et
• réalisation des étapes suivantes si le CDR reçu est en liaison avec le compte prépayé de l'utilisateur et si le crédit restant du solde de compte du compte prépayé est en dessous d'un premier solde :
o création d'un message d'interruption pour interrompre le service de télécommunication (603), et
o envoi du message d'interruption vers le composant réseau (605) ;
le procédé comprenant en outre les étapes suivantes réalisées par le système de traitement par lots :
• réception du CDR transféré (610), et
• stockage du CDR reçu (611) dans une base de données (509) ;
le procédé comprenant en outre les étapes suivantes réalisées par le système de traitement par lots à la fin du cycle de facturation du compte post-payé :
• interrogation de la base de données pour l'extraction des CDR reçus au cours du cycle de facturation (612),
• création d'un enregistrement de l'événement, l'enregistrement de l'événement comprenant les CDR extraits (613), et
• envoi de l'enregistrement de l'événement vers le système de notation entraîné en temps réel par un évènement(614) ;
le procédé comprenant en outre les étapes suivantes réalisées par le système de notation entraîné en temps réel par un événement en réponse à la réception de l'enregistrement de l'événement en provenance du système de traitement par lots (616):
• introduction des CDR compris dans l'enregistrement de l'événement dans le composant de notation pour déterminer le montant à payer pour le CDR compris dans l'enregistrement de l'événement (617), et
• envoi d'un message de facturation au système de traitement par lots comprenant le montant à payer pour les CDR compris dans l'enregistrement de l'événement (619).

11. Procédé mis en oeuvre par ordinateur selon la revendication 10, dans lequel le procédé comprend en outre les étapes suivantes réalisées par le système de notation entraîné en temps réel par un événement en réponse à la réception du CDR en provenance du composant réseau pour un service de télécommunication mis à la disposition d'un utilisateur si une qualité de service, QoS, du service de télécommunication dépend de l'historique de l'usage du service de télécommunication par l'utilisateur :
• extraction de l'information sur l'usage depuis le CDR reçu (622),
• mise à jour d'un seul ou de plusieurs des compteurs en utilisant l'information sur l'usage extraite, le seul compteur ou les plusieurs compteurs étant révélateurs de l'historique de l'usage du service de télécommunication (623),
• création d'un message QoS en vertu de l'information stockée dans le ou les plusieurs compteurs (624), et
• envoi du message QoS au composant réseau (625) ;
le procédé comprenant en outre l'étape suivante réalisée par le système de traitement par lots à la fin d'un cycle de facturation du compte post payé :
• envoi d'un message de réinitialisation du compteur au système de notation entraîné en temps réel par un événement ;
le procédé comprenant en outre les étapes suivantes réalisées par le système de notation entraîné en temps réel par un événement :
• réception du message de réinitialisation du compteur, et
• en réponse à la réception du message de réinitialisation du compteur, la réinitialisation du seul compteur ou des plusieurs compteurs.

12. Procédé mis en oeuvre par ordinateur selon l'une des revendications 10 ou 11, le procédé comprenant en outre l'étape suivante réalisée par le système de traitement par lots :
• contrôle d'un volume de données transmis par unité de temps en provenance du système de notation entraîné en temps réel par un événement vers le système de traitement par lots, dans lequel les données comprennent les CDR transférés, où l'envoi de l'enregistrement de l'événement vers le système de notation entraîné en temps réel par un événement est réalisé lorsque le volume des données transmises par unité de temps est en dessous de la seconde valeur de seuil.

13. Procédé mis en oeuvre selon l'une des revendications 10 ou 11, dans lequel l'envoi de l'enregistrement de l'événement vers le système de notation entraîné en temps réel par un événement est réalisé par l'intermédiaire d'un service en ligne (513), où le procédé comprend les étapes suivantes réalisées par le service en ligne (615) :
• réception de l'enregistrement de l'événement en provenance du système de traitement par lots ;
• exécution d'au moins un seul parmi les groupes d'étapes suivants, où un seul groupe d'étapes comprend les étapes suivantes :
∘ identification des CDR du même type dans l'enregistrement de l'événement,
∘ création d'un seul CDR composite pour tous les CDR identifiés, et
∘ remplacement de tous les CDR identifiés dans l'enregistrement de l'événement par le CDR composite, où le composant de notation est configuré pour déterminer le même montant à payer pour le CDR composite et pour tous les CDR identifiés ;
en un autre groupe d'étapes comprend les étapes suivantes :
∘ identification d'une seule ou de plusieurs règles du programme de fidélité de l'utilisateur applicable à un seul CDR ou à plusieurs parmi les CDR dans l'enregistrement de l'événement, et
∘ modification du seul CDR ou de plusieurs CDR identifiés dans l'enregistrement de l'événement selon la ou les règles applicable(s) de fidélisation de l'utilisateur ; et
• envoi de l'enregistrement de l'événement vers le système de notation entraîné en temps réel par un événement après la réalisation d'au moins un seul groupe parmi les groupes d'étapes suivants.

14. Procédé mis en oeuvre par ordinateur selon l'une quelconque des revendications 10 à 13, le système de télécommunication cellulaire numérique mobile comprenant en outre un serveur de base de données pour le stockage des comptes prépayés et des compte post-payés, où un compte respectif parmi certains des comptes post-payés comprend une liste des services respectifs des services de télécommunication à mettre à la disposition, par un seul ou plusieurs composants réseau, d'un utilisateur ayant le compte respectif parmi certains des comptes post-payés, une information de notation respective pour déterminer les montants à payer pour les CDR créés en liaison avec l'utilisation des services de télécommunication de la liste des services du compte respectif parmi certains des comptes post-payés, une information du cycle de facturation respectif qui détermine le calendrier des cycles de facturation du compte respectif parmi certains des comptes post-payés, où le compte respectif parmi certains des comptes prépayés comprend une liste de services respectifs des services de télécommunication à mettre à la disposition par un seul ou plusieurs composants réseau de l'utilisateur ayant le compte respectif parmi certains des comptes prépayés et une information de notation respective pour déterminer les montants à payer pour les CDR créés en liaison avec l'utilisation des services de télécommunication de la liste des services du compte respectif parmi certains des comptes post-payés, où le procédé comprend en outre les étapes suivantes réalisées par le serveur de la base de données :
• envoi de la liste des services vers le ou les plusieurs composants de réseau respectif(s),
• envoi de l'information de notation vers le système de notation entraîné en temps réel par un événement respectif, et
• envoi de l'information de cycle de facturation vers le système de traitement par lots ;
où le procédé comprend en outre les étapes suivantes réalisées par le composant réseau :
• réception de la liste des services en provenance du serveur de la base de données,
• stockage de la liste des services reçue, et
• fourniture des services de la liste reçue à un utilisateur ayant soit le compte post-payé soit le compte prépayé comprenant la liste stockée des services ;
où le procédé comprend en outre les étapes suivantes réalisées par le système de notation entraîné en temps réel par un événement :
• réception de l'information de notation en provenance du serveur de la base de données,
• stockage de l'information de notation reçue, où le composant de notation est configuré pour noter le CDR introduit selon l'information de notation stockée ;
où le procédé comprend en outre les étapes suivantes réalisées par le système de traitement par lots :
• réception de l'information du cycle de facturation en provenance du serveur de la base de données, et
• stockage de l'information du cycle de facturation reçue.

15. Support lisible par ordinateur sur lequel est stocké un code exécutable par ordinateur par les processeurs de l'ordinateur qui contrôlent un système de télécommunication cellulaire numérique mobile, où l'exécution des instructions du code exécutable amène les processeurs de l'ordinateur à exécuter le procédé mis en oeuvre par ordinateur selon les revendications 10 à 14 sur le système de télécommunication cellulaire numérique mobile.
